# EUROPEAN PATENT SPECIFICATION

(11) **EP 3 913 972 B1**
(45) Date of publication and mention of the grant of the patent: **09.10.2024**
(21) Application number: 20742092.8
(22) Date of filing: 15.01.2020
(51) Int. Cl.: H04W 36/00, H04W 36/06, H04B 7/06, H04W 36/30, H04W 72/12, H04W 74/00

(54) **BEAM FAILURE RECOVERY METHOD AND APPARATUS, UE, BASE STATION, AND READABLE STORAGE MEDIUM**
STRAHLAUSFALLWIEDERHERSTELLUNGSVERFAHREN UND -VORRICHTUNG, UE, BASISSTATION UND LESBARES SPEICHERMEDIUM
PROCÉDÉ ET APPAREIL DE RÉCUPERATION DE DÉFAILLANCE DE FAISCEAU, ÉQUIPEMENT UTILISATEUR, STATION DE BASE ET SUPPORT D'INFORMATIONS LISIBLE

(30) Priority: 16.01.2019 CN 201910041639
(43) Date of publication of application: 24.11.2021
(73) Proprietor: Datang Mobile Communications Equipment Co., Ltd., Beijing 100083 (CN)
(72) Inventor: HUANG, Qiuping, Beijing 100191 (CN); CHEN, Runhua, Beijing 100191 (CN); GAO, Qiubin, Beijing 100191 (CN)
(74) Representative: Cabinet Nony
(86) International application number: PCT/CN2020/072320
(87) International publication number: WO 2020/147762

(56) References cited:
- CN-A- 102 448 078
- CN-A- 108 513 737
- US-A1- 2018 279 287
- HUAWEI ET AL: "Beam failure recovery for Scell", vol. RAN WG1, no. Taipei; 20190121 - 20190125, 12 January 2019 (2019-01-12), XP051576384, Retrieved from the Internet <URL:http://www.3gpp.org/ftp/tsg%5Fran/WG1%5FRL1/TSGR1%5FAH/NR%5FAH%5F1901/Docs/R1%2D1900846%2Ezip> [retrieved on 20190112]
- QUALCOMM INCORPORATED: "Enhancements on Multi-beam Operation", vol. RAN WG1, no. Taipei, Taiwan; 20190121 - 20190125, 12 January 2019 (2019-01-12), XP051576443, Retrieved from the Internet <URL:http://www.3gpp.org/ftp/tsg%5Fran/WG1%5FRL1/TSGR1%5FAH/NR%5FAH%5F1901/Docs/R1%2D1900906%2Ezip> [retrieved on 20190112]
- VIVO: "Discussion on Multi-Beam Operation", vol. RAN WG1, no. Taipei; 20190121 - 20190125, 12 January 2019 (2019-01-12), XP051575762, Retrieved from the Internet <URL:http://www.3gpp.org/ftp/tsg%5Fran/WG1%5FRL1/TSGR1%5FAH/NR%5FAH%5F1901/Docs/R1%2D1900138%2Ezip> [retrieved on 20190112]
- SAMSUNG: "Enhancements on multi-beam operations", vol. RAN WG1, no. Taipei, Taiwan; 20190121 - 20190125, 11 January 2019 (2019-01-11), XP051576610, Retrieved from the Internet <URL:http://www.3gpp.org/ftp/tsg%5Fran/WG1%5FRL1/TSGR1%5FAH/NR%5FAH%5F1901/Docs/R1%2D1901077%2Ezip> [retrieved on 20190111]
- INTEL CORPORATION: "Summary on SCell BFR and Beam Measurement", 3GPP DRAFT; R1-1811853, 12 October 2018 (2018-10-12), Chandu China, pages 1 - 15, XP051519178
- SPREADTRUM COMMUNICATIONS: "Beam Failure recovery on SCell", 3GPP DRAFT; R2-1804475, 20 April 2018 (2018-04-20), Sanya, China, pages 1 - 2, XP051414775

## Description

### Field

The present application relates to the field of communications, in particular to beam failure recovery methods and apparatuses.

### Background

As resources in a low frequency band become scarce, a millimeter-wave frequency band becomes an important frequency band for future application of a mobile communication system due to more spectrum resources and capability of providing a larger bandwidth. The millimeter-wave frequency band has a relatively short wavelength so as to have propagation properties, such as higher propagation loss as well as poor reflection and diffraction properties, different from those of a traditional frequency spectrum in the low frequency band. Therefore, generally, a larger-scale antenna array may be adopted to form a formed beam with a higher gain so as to overcome the propagation loss and guarantee system coverage. For a millimeter-wave antenna array, it is shorter in wavelength and smaller in antenna element spacing and pore diameter, so that more physical antenna elements may be integrated in a two-dimensional antenna array with a finite size; and meanwhile, due to the finite size of the millimeter-wave antenna array, in view of factors such as hardware complexity, cost overhead and power consumption, a digital beam forming mode adopted in the low frequency band cannot be adopted, however, a mixed beam forming mode in which an analog beam is combined with a finite digital port is generally adopted.

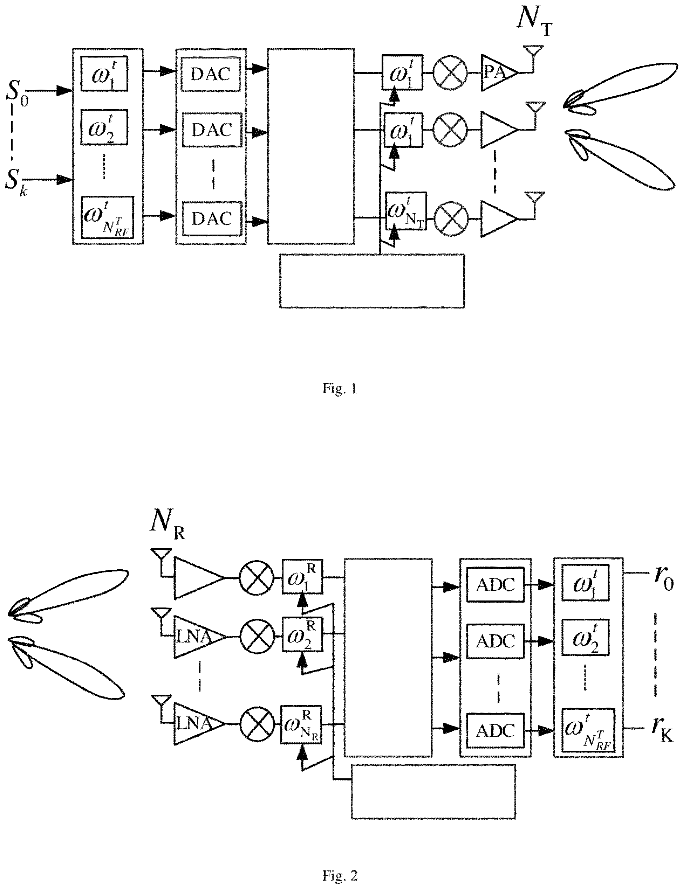

As shown in Fig. 1 and Fig. 2 which are diagrams showing mixed formed beam transceiving architectures, Fig. 1 shows a transmitting terminal where there are N_{T} antennae, Fig. 2 shows a receiving terminal where there are N_{R} antennae, each antenna in the transmitting terminal and the receiving terminal has an independent radio frequency channel and only has K digital channels, and K is smaller than or equal to N_{T} and N_{R}; and other structures in the transmitting terminal and the receiving terminal will be apparent to those skilled in the art, and therefore, the descriptions thereof are omitted herein. Each radio frequency link allows independently adjust a magnitude and phase of a transmitted signal in the radio frequency channel to form an analog beam forming signal. For an antenna array adopting full-digital beam forming, each antenna has an independent digital link channel so as to be achieved by controlling a magnitude and phase of each path of signal in a base band.

Analog beam forming has the following characteristics: for analog beam forming, the phase of the signal transmitted by each antenna is generally changed by a phase shifter; and due to the ability restriction of a device, analog beam forming is almost performed on an overall bandwidth, but cannot be performed like digital beam forming which is independent forming for parts of sub-bands, and therefore, analog beam forming is performed in a Time Division Multiplexing (TDM) mode. Due to these characteristics, the forming flexibility of analog beam forming should be lower than that of digital beam forming. However, since the number of digital links required by an antenna array adopting analog beam forming is far lower than that of an antenna array adopting digital beam forming, the cost of the antenna array adopting analog beam forming is obviously reduced under the condition that the number of the antennae become very large. A mixed beam forming structure balances the flexibility of digital beam forming and the low complexity of analog beam forming and has the ability of supporting the simultaneous forming of a plurality of data flows and a plurality of users. Meanwhile, the complexity is also controlled within a reasonable range, and therefore, it becomes a mode widely adopted in millimeter-wave transmission and becomes a most important transmission mode of a 5G New Radio (NR) system.

For a system for transmission by using a millimeter-wave high-frequency band, a Physical Downlink Control Channel (PDCCH) of the system can realize higher forming gain and larger coverage range by using analog formed beam transmission. Radio resources for the PDCCH are semi-statically divided into a plurality of Control Resource SETs (CORESETs), each CORESET includes a plurality of radio resources of the PDCCH. Each CORESET may be semi-statically matched with a beam transmitting direction by a base station, and the different CORESETs are matched with beams in different directions. The base station may be dynamically switched in the different CORESETs, thereby realizing dynamic switching of beams. When the PDCCH is transmitted, the base station may select the CORESET in an appropriate beam direction according to information of a terminal. At the receiving terminal, the terminal performs blind detection in the plurality of configured CORESETs. For each candidate CORESET, the terminal will perform receiving by using a receiving beam corresponding to a sending beam of the CORESET. One important challenge for analog beam forming in a high frequency band is to overcome high propagation loss of a transmission signal and high probability that the transmission signal is shielded. For a shielded PDCCH, the terminal cannot accurately acquire control information of downlink transmission, and thus, the receiving property is lowered, for example, the rate is reduced, the scheduling delay is prolonged, and the user experience is lowered.

A method capable of reducing shielding probability is to configure beams in a plurality of directions for the CORESET, so that the PDCCH may be transmitted in a plurality of directions, and then, the problem of link unreliability caused by shielding in a certain direction is avoided. However, by using this method, a new problem is brought, that is, the ability that the terminal performs blind detection on the PDCCH is restricted, so that the number of the CORESETs configured to each direction of the terminal may be reduced. For example, it is restricted in the NR standard (Rel-15) that each terminal is configured with three CORESETs at most in the same activated Bandwidth Part (BWP). In theory, if the angle spread of the sending beam is wide enough and capable of covering a coverage angle area of an overall cell, the problem of beam shielding may be avoided. However, in order to obtain higher beam forming gain, generally, the coverage angle of a beam is relatively small, and the beam is relatively narrow. In view of the characteristics of finite number of the CORESETs and narrow beams, coverage hole of a control channel is easily caused due to a finite angle coverage range of the control channel during millimeter-wave communication in a high-frequency band, and thus, the reliable receiving of the control channel cannot be guaranteed. If it is performed like a communication system such as a Long Term Evolution (LTE) system in which when all downlink beams configured for the control channel fail, a radio link is considered to fail, and a process of reconstructing the radio link is started, it is possible to result in resource waste in addition to increment of delay because the receiving quality of a downlink control signal may meet a requirement if only the sending beam and/or receiving beam is (or are) changed. In order to avoid such resource waste and delay, a rapid and reliable beam failure detection and recovery process is standardized in the NR standard, so that a network side can rapidly recover a transmission process from beam failure, and a specific Beam Failure Recovery (BFR ) mechanism includes the following processes: beam failure detection, beam failure and new candidate beam reporting and beam failure recovery response.

The BFR mechanism of the NR system in the related art can only be performed on a Primary cell (PCell), Carrier Aggregation (CA) is not taken into account, and therefore, when a User Equipment (UE) performs CA, a Secondary cell (SCell) is often configured in a high frequency band. However, there is no mechanism for performing beam failure recovery on the SCell in the related art, which results in incapability of performing beam failure recovery of the SCell, thereby affecting subsequent information transmission,

3GPP R1-1900846 "HUAWEI ET AL: Beam failure recovery for Scell", 3GPP R1-1900906 "QUALCOMM INCORPORATED: Enhancements on Multi-beam Operation" and 3GPP R1-1900138 "VIVO: Discussion on Multi-Beam Operation" are considered to be relevant prior art to the following disclosure.

### Summary

The present application provides beam failure recovery methods and apparatuses, so as to solve the problem that beam failure recovery of a SCell cannot be performed in the related art. The invention is set out in the appended set of claims.

### Brief Description of the Drawings

In order to describe technical solutions in embodiments of the present application or the prior art more clearly, accompanying drawings required for describing the embodiments or the prior art will be briefly introduced below. Apparently, the accompanying drawings in the following description show only some embodiments of the present application, and those of ordinary skill in the art may still derive other accompanying drawings from these accompanying drawings without creative efforts.
Fig. 1 is a schematic diagram showing a transmitting terminal in a mixed formed beam transceiving architecture diagram.
Fig. 2 is a schematic diagram showing a receiving terminal in the mixed formed beam transceiving architecture diagram.
Fig. 3 is a schematic diagram showing a beam failure recovery process provided in embodiment 1 of the present application.
Fig. 4 is a schematic diagram showing a beam failure recovery process provided in an embodiment of the present application.
Fig. 5 is a schematic diagram showing a structure of a UE provided by an embodiment of the present application.
Fig. 6 is a schematic diagram showing a structure of a base station provided by an embodiment of the present application.
Fig. 7 is a schematic diagram showing a beam failure recovery apparatus provided by an embodiment of the present application.
Fig. 8 is a schematic diagram showing a beam failure recovery apparatus provided by an embodiment of the present application.

### Detailed Description of the Embodiments

In order to perform beam failure recovery of a SCell, embodiments of the present application provide a beam failure recovery method and apparatus, a UE, a base station, and a readable storage medium.

In order to make objectives, technical solutions and advantages of the present application clearer, the present application will be further described in detail below in conjunction with the accompanying drawings.

Technologies described herein can be applied to, but not limited to a Long Time Evolution (LTE)/ LTE-Advanced (LTE-A) system and an NR system, and can also be applied to various wireless communication systems such as a Code Division Multiple Access (CDMA) system, a Time Division Multiple Access (TDMA) system, a Frequency Division Multiple Access (FDMA) system, an Orthogonal Frequency Division Multiple Access (OFDMA) system, a Single-carrier Frequency-Division Multiple Access (SC-FDMA) system and other systems. Terms "system" and "network" are often used interchangeably. The CDMA system is capable of realizing a radio technology such as CDMA2000 and Universal Terrestrial Radio Access (UTRA). The UTRA system includes Wideband Code Division Multiple Access (WCDMA) and other CDMA variants. The TDMA system is capable of realizing a radio technology such as Global System for Mobile Communicatio (GSM). The OFDMA system is capable of realizing a radio technology such as Ultra Mobile Broadband (UMB), Evolution-UTRA (E-UTRA), IEEE 1102.11(Wi-Fi), IEEE 1102.16 (World Interoperability for Microwave Access, WiMAX), IEEE 1102.20 and Flash-OFDM. The UTRA and the E-UTRA are parts of a Universal Mobile Telecommunications System (UMTS). The LTE and more advanced LTE (such as LTE-A) are new UMTS editions using E-UTRA. The NR, the UTRA, the E-UTRA, the UMTS, the LTE, the LTE-A and the GSM are described in a document from an organization named as "3GPP (3rd Generation Partnership Project)". The CDMA2000and the UMB are described in a document from an organization named as "3GPP2 (3rd Generation Partnership Project 2)". The technologies described herein not only can be used for the above-mentioned system and radio technologies, but also can be used for other systems and radio technologies. However, the NR system is described below for an exemplary purpose, and the term NR is used in most of the following descriptions although these technologies can also be used for other application in addition to the NR system.

In the embodiments of the present application, there are no limitations to the form of an access network, it may be an access network including a macro base station, a pico base station, a Node B (the name of a 3G mobile base station), an eNB, a Femto eNB or Home eNode B or Home eNB or HeNB), a relay station, an access point, an RRU (Remote Radio Unit), an RRH (Remote Radio Head). The base station may be a 5G base station and a base station with a version higher than 5G (such as gNB and 5G NR NB), or a base station (such as an eNB, a Wireless Local Area Network (WLAN), an access point or other access points) in other communication systems, where the base station may also be referred to as a node B, an evolved node B, an access point, a Base Transceiver Station (BTS), a radio base station, a radio transceiver, a Basic Service Set (BSS), an Extended Service Set (ESS), a node B, an Evolved Node B (eNB), a home Node B, a home eNB, a WLAN access point, a WiFi node or other certain terms in the field, and the base station is not limited to a specific technical vocabulary as long as the same technical effect is achieved. It should be noted that the base station in the NR system is only described as an example in the embodiments of the present application, but the specific type of the base station is not limited. A user terminal may be a mobile telephone (or mobile phone) or other equipment capable of transmitting or receiving radio signals and including a user equipment, a Personal Digital Assistant (PDA), a wireless modem, a wireless communication apparatus, a handheld apparatus, a laptop computer, a cordless telephone, a Wireless Local Loop (WLL) station, a Customer Premise Equipment (CPE) or mobile intelligent hotspot capable of converting a mobile signal to a WiFi signal, an intelligent household electrical appliance or other equipment capable of spontaneously realizing communication with a mobile communication network without manual operation.

### Embodiment 1.

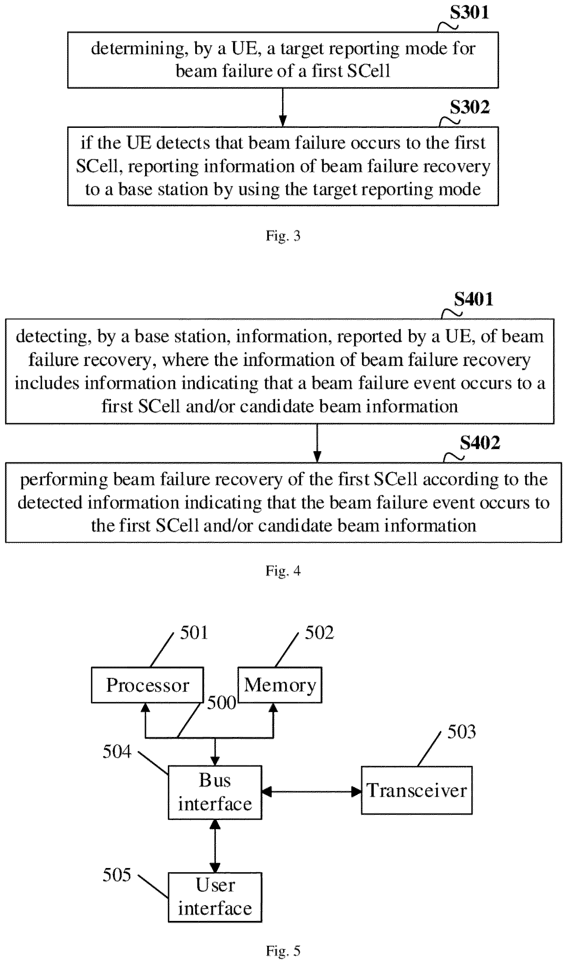

Fig. 3 is a schematic diagram showing a beam failure recovery process provided in the embodiments of the present application. The process includesS301 and S302.

S301: a UE determines a target reporting mode for beam failure of a first SCell.

The beam failure recovery method provided in the embodiments of the present application is applied to a UE.

A criterion used for determining the reporting mode for beam failure of the SCell may be prestored in the UE, and therefore, the UE determines the reporting mode for beam failure of the first SCell, the SCell of which beam failure having the target reporting mode determined by the UE is referred to as the first SCell, and the reporting mode for beam failure of the first SCell is referred to as the target reporting mode.

For different SCells, the criterions used for determining the reporting modes for beam failure of the SCells are the same or different.

The target reporting mode for beam failure of the first SCell includes bearing modes and/or cells adopted when beam failure reporting of the first SCell is performed.

S302: if the UE detects that beam failure occurs to the first SCell, the UE reports information of beam failure recovery to a base station by using the target reporting mode.

The UE is capable of detecting that whether beam failure occurs to the first SCell, and there are various modes for implementing a process that the UE detects whether beam failure occurs to the first SCell. For example, one possible process may be described as follows: during beam failure detection, the base station transmits a PDCCH through a plurality of downlink control channel beams, and therefore, downlink beam failure is defined as: the quality of each downlink control channel beam received by a terminal is lower than a specified threshold, so that the terminal cannot effectively receive control information transmitted by the PDCCH. Without loss of generality, it is assumed that the base station has M beams for transmitting the downlink control channel, a dedicated reference signal is configured for each beam, the terminal judges whether the downlink control channel meets a requirement on receiving quality by measuring the reference signals of the M beams. If the channel quality of all of the M beams is lower than a set threshold, the terminal will consider that a beam failure event occurs. Monitoring index parameters for beam failure in the NR system include a Block Error Rate (BLER). The specific process is described as follows: the terminal measures the performance of the reference signal of the same beam as the downlink control channel and deduces the BLER of the PDCCH according to a measured signal-to-interface-and-noise ratio of the reference signal. If a BLER value is higher than the set threshold, for example, the set threshold is 10%, the beam failure is considered. When the terminal measures that BLER values of all of the M beams are higher than the threshold, the beam failure event of the current first SCell is considered to occur. During BLER measurement, the PDCCH is not required to be demodulated and decoded, the performance of the corresponding reference signal is only measured, the BLER of the PDCCH is deduced according to a result of the reference signal. The objective of beam failure measurement is to know whether the downlink control channel can be correctly received by the terminal, and therefore, the BLER value serving as a detection index parameter of beam failure can favorably achieve the aim of beam failure measurement.

The reference signal for beam failure measurement or detection may be configured in an explicit configuration mode that the terminal is informed by a network through a signaling or in an implicit configuration mode that the terminal controls beam configuration of the signaling. For the explicit configuration mode, the base station configures, for the terminal, a reference signal set for measuring beam quality through the signaling, where the reference signal set includes a reference signal type such as a Synchronization Signal Block (SSB) or a Channel State Information-Reference Signal (CSI-RS), transmission power, resource indication of a reference signal and a reference signal resource which are all required to be clearly configured for the terminal through the network. For the implicit indication mode, the reference signal set for measuring beam quality may be deduced from a Transmission Configuration Indication (TCI) state of a corresponding CORESET resource. Specifically, for a CORESET relating to analog formed beam transmission, the TCI state may include configuration information of a reference signal, and the type of a Quasi co-location (QCL) corresponding to the reference signal is QCL-TypeD. If the network does not explicitly configure the reference signal for beam failure detection for the terminal, the terminal may measure the reference signal in the TCI state configured by the CORESET so as to judge whether beam failure occurs.

An essential feature of wireless mobile communication lies in that wireless channels of a sending terminal and a receiving terminal have the characteristics of rapid undulation and change. Therefore, it is possible that the beam quality continuously jumps near the threshold. In order to avoid a ping-pong effect and a frequent beam failure event, the beam failure event may be regarded to occur only when a beam measurement result is lower the set threshold for a long enough time. Whether the beam failure event occurs may be judged by counting the number of times that the beam measurement is lower than the threshold. Specifically, the reference signal of the downlink control channel is measured during transmission every time, when a measurement result is lower than the threshold, failure is counted once, while success is counted once when the measurement result is higher than the threshold; and the beam failure event is determined to occur only when the number of times of continuous failure is greater than a preset value.

If the UE detects that beam failure occurs to the first SCell, the UE reports information of beam failure recovery of the first SCell to the base station by using the determined target reporting mode for beam failure of the first SCell.

During beam failure and new candidate beam reporting, after the terminal measures that the beam failure event is transmitted, the terminal needs to report the event to the base station and may also report new candidate beam information. Therefore, the information of beam failure recovery of the first SCell may include information indicating that a beam failure event occurs to the first SCell and/or candidate beam information and/or beam quality information, detected by the UE, of the first SCell, the information indicating that the beam failure event occurs to the first SCell may include identification information of the first SCell and may also include indication information used for indicating that the beam failure event occurs to the SCell, and the candidate beam information may include candidate beam information selected by the UE (or information of a candidate beam considered to be better in quality by the UE, or information of a candidate beam of which the quality is higher than a certain threshold) and may also include the identification information of the first SCell, where the identification information is used for indicating that the candidate beam is the candidate beam of the first SCell and the like.

One or more candidate beams used for performing beam failure recovery of the SCell and corresponding to the first SCell are configured in the UE. A new candidate beam used for performing beam failure recovery may be used for the base station to transmit information responding to the reported failure event and subsequently transmit data, control information and the like between the base station and the terminal. In order to make the terminal report the new candidate beam, the network may configure a corresponding reference signal resource set for the terminal, and these reference signals correspond to a candidate beam set. The terminal determines a receiving and transmitting beam pair for a transmission link by measuring the reference signal set. After the terminal completes the measurement, the new candidate beam is reported to the network, where the selected new candidate beam may meet a requirement for a performance threshold: Reference Signal Receiving Power (RSRP) exceeds a threshold. Optionally, the new candidate beam described herein is the candidate beam information included in the above-mentioned information of beam failure recovery of the first SCell. Optionally, the terminal only reports one new candidate beam to the base station. If the quality of a plurality of beams is found to meet the requirement for the threshold during measurement, the terminal may select one of the beams to be reported to the base station according to its judgment. For example, the strongest beam is reported. Optionally, the terminal may report a plurality of new candidate beams to the base station. The base station may select a new beam based on the new candidate beam to perform downlink transmission of the SCell.

There are various modes for implementing the process that the UE reports the information of beam failure recovery to the base station.

The UE may only report information indicating that a beam failure event occurs to the first SCell to the base station, at the moment, the information of the beam failure recovery only includes the information indicating that the beam failure event occurs to the first SCell; the candidate beam information may be only reported to the base station, at the moment, the information of the beam failure recovery only includes the candidate beam information; the information indicating that the beam failure event occurs to the first SCell and the candidate beam information may be reported to the base station, at the moment, the information indicating that the beam failure event occurs to the first SCell and the candidate beam information may be simultaneously included in the information of beam failure recovery and may be reported to the base station at the same time; and the information indicating that the beam failure event occurs to the first SCell and the candidate beam information may be respectively included in the information of beam failure recovery, and then, the information, including the information indicating that the beam failure event occurs to the first SCell, of beam failure recovery and the information, including the candidate beam information, of beam failure recovery are reported to the base station according to a predefined order.

The order of the process that the UE determines the target reporting mode for beam failure of the first SCell and the process of detecting that beam failure occurs to the first SCell is not limited in the embodiment of the present application. For example, it may be firstly detected that beam failure occurs to the first SCell, and then, the target reporting mode for beam failure of the first SCell may be determined; or the target reporting mode for beam failure of the first SCell may be firstly determined, and then, it is detected whether target reporting mode for beam failure of the first SCell.

When the UE reports the information of beam failure recovery to the base station by using the target reporting mode, specifically, the information of beam failure recovery may be reported according to the determined bearing modes and/or cells adopted when the beam failure reporting of the first SCell is performed.

After the UE reports the information of beam failure recovery to the base station, the base station may detect the information, reported by the UE, of beam failure recovery. It should be noted that the UE reports the information of beam failure recovery to the base station by using the target reporting mode, and the base station detects the information, reported by the UE, of beam failure recovery by using a mode corresponding to the target reporting mode.

After the base station detects the information, reported by the UE, of beam failure recovery, beam failure recovery of the first SCell is performed according to the information indicating that the beam failure event occurs to the first SCell and/or the candidate beam information in the information of beam failure recovery.

Further, the base station may transmit a beam failure recovery response to the UE by using the candidate beam reported by the UE.

During beam failure recovery response, each terminal may be configured with a plurality of CORESETs for transmitting the PDCCH, and each of the CORESETs is configured with a beam transmitting direction. Beams corresponding to these original CORESETs cannot be changed during beam recovery. The network will configure, for the terminal, a specified CORESET referred to as CORESET_BFR for transmitting a control signaling for beam recovery. After the terminal measures and reports the information of beam failure recovery, the terminal starts to monitor the PDCCH of the CORESET_BFR, and it is assumed that the used beam is the reported new candidate beam. Corresponding to the reporting process of the terminal, the base station will transmit the PDCCH by using a new beam in the CORESET_BFR. When the terminal detects the PDCCH, the reported beam failure event and the new candidate beam will be considered to be correctly received by the base station.

After the base station receives a beam failure event, reported by the terminal, of a SCell, beam failure recovery of the SCell may be performed.

It should be noted that if there is at least one SCell to which beam failure occurs, the information, reported to the base station by the UE, of beam failure recovery may indicate beam failure events on one or more SCells, that is, the information includes information indicating that a beam failure event occurs to the first SCell corresponding to one or more SCells and/or candidate beam information.

In the embodiments of the present application, a UE may perform beam failure reporting of a SCell in a relatively reliable mode or a relatively reliable mode selected by a base station, so that a system is able to use a reliable beam reporting mode of the SCell to perform beam failure recovery of the SCell.

Optionally, the target reporting mode is a predefined reporting mode. For example, the target reporting mode is a mode of performing reporting by using a PRACH on a PCell. For another example, the target reporting mode is a mode of performing reporting by using a PRACH on a Cell corresponding to the first SCell and capable of transmitting the PUCCH and the like.

### Embodiment 2.

The target reporting mode for beam failure of the first SCell may include the bearing modes and/or cells adopted when beam failure reporting of the first SCell is performed. Based on the above-mentioned embodiment, in the embodiment of the present application, if the target reporting mode for beam failure of the first SCell includes the bearing modes adopted when beam failure reporting of the first SCell is performed, the step that the information of beam failure recovery is reported to the base station by using the target reporting mode includes at least one of the following steps: the information of beam failure recovery is reported to the base station through a Physical Random Access Channel (PRACH); the information of beam failure recovery is reported to the base station through a Physical Uplink Control Channel (PUCCH); the information of beam failure recovery is reported to the base station through a Physical Uplink Shared Channel (PUSCH) based on configured grant which is also referred to as a grant-free mode; and the information of beam failure recovery is reported to the base station through a Sounding Reference Signal (SRS) corresponding to the first SCell and used for performing beam failure recovery.

The bearing modes adopted when beam failure reporting of the first SCell is performed in the target reporting mode for beam failure of the first SCell includes one or several of modes such as a mode of performing reporting through the PRACH, a mode of performing reporting through the PUCCH, a mode of performing reporting through the PUSCH based on configured grant, and a mode of performing reporting through the SRS corresponding to the first SCell and used for performing beam failure recovery.

Correspondingly, when the base station detects the information, reported by the UE, of beam failure recovery, adopted is one or several of modes such as a mode of performing detection through the PRACH, a mode of performing detection through the PUCCH, a mode of performing detection through the PUSCH based on configured grant, and a mode of performing detection through the SRS corresponding to the first SCell and used for performing beam failure recovery.

If the target reporting mode for beam failure of the first SCell includes the adopted cell, the step that the information of beam failure recovery is reported to the base station by using the target reporting mode includes: the information of beam failure recovery is reported to the base station on the first SCell; and/or the information of beam failure recovery is reported to the base station on a first cell corresponding to the first SCell and used for performing beam failure recovery.

The cell adopted when beam failure reporting of the first SCell is performed in the target reporting mode for beam failure of the first SCell includes the first SCell on which reporting is performed and/or the first cell which corresponds to the first SCell and is used for performing beam failure recovery and on which reporting is performed.

Correspondingly, when the base station detects the information, reported by the UE, of beam failure recovery, detection is performed on the first SCell, and/or is performed on the first cell corresponding to the first SCell and used for performing beam failure recovery.

A cell corresponding to the first SCell and used for performing beam failure recovery (that is, a cell used for reporting the information of beam failure recovery of the first SCell) may be referred to as a first cell, the first cell may include a first SCell, other SCells, a PCell (Primary cell) and other cells, and generally, the first cell does not include the first SCell.

If the determined target reporting mode for beam failure of the first SCell only includes the bearing mode adopted when beam failure reporting of the first SCell is performed, the cell adopted when beam failure reporting of the first SCell is performed may adopt a default cell; and if the determined target reporting mode for beam failure of the first SCell only includes the cell adopted when beam failure reporting of the first SCell is performed, the bearing mode adopted when beam failure reporting of the first SCell may adopt a default bearing mode.

In the embodiment of the present application, the UE reports the information of beam failure recovery to the base station according to the determined target reporting mode, so that the base station performs beam failure recovery of the first SCell after detecting the information of beam failure recovery.

### Embodiment 3.

Based on each of the above-mentioned embodiments, in the embodiment of the present application, if the information of beam failure recovery includes candidate beam information, the step that the information of beam failure recovery is reported to the base station through the PRACH includes: a preamble sequence of the PRACH is determined by using the candidate beam information, a PRACH signal is generated by using the preamble sequence, and the PRACH signal serving as the information of beam failure recovery is transmitted to the base station.

During beam failure measurement and recovery, in order not to affect a conventional random access process, the channel for beam failure recovery may be the PRACH. When the information of beam failure recovery is reported to the base station through the PRACH, if the information of beam failure recovery includes an identifier of the SCell to which beam failure occurs and/or candidate beam information, the UE determines the preamble sequence of the PRACH by using the identifier of the SCell to which beam failure occurs and/or the candidate beam information, the preamble sequence of the PRACH is used for generating a PRACH signal, and after the PRACH is received by a network, the identifier of the SCell to which beam failure occurs and/or the candidate beam information may be determined according to the preamble sequence corresponding to the PRACH.

An association relationship between the SCell and/or the candidate beam information and the preamble sequence may be preconfigured in the UE, and therefore, the UE may determine the preamble sequence of the PRACH by using the SCell and/or the candidate beam information.

The base station determines the SCell and/or the candidate beam information according to the preamble sequence of the detected PRACH signal and the association relationship between the preamble sequence and the SCell and/or the candidate beam information.

The candidate beam information may be carried by a reference signal for characterizing the candidate beam (we can mark the reference signal as a BFR-RS), for example, the candidate beam information is carried by an ID of the reference signal for characterizing the candidate beam.

A possible association relationship between the preamble sequence of the PRACH and the candidate beam information is that the preamble sequence of the PRACH is generated through the ID or identifier of the BFR-RS.

The BFR-RS may be a Synchronization Signal Block (SSB) or a CSI-RS and the like.

An association relationship between the PRACH and the BFR-RS may also be an association relationship between the BFR-RS and a PRACH occasion (transmitting occasion). For example, different BFR-RSs correspond to different PRACH occasions. The base station may determine the BFR-RS based on an occasion where the detected PRACH is located.

The association relationship between the PRACH and the BFR-RS may also be an association relationship between the BFR-RS and a PRACH resource. For example, different BFR-RSs correspond to different PRACH resources. The base station may determine the BFR-RS based on a resource corresponding to the detected PRACH.

An association relationship between the PRACH and the SCell may also be an association relationship between the SCell and the PRACH resource. For example, different SCells correspond to different PRACH resources. The base station may determine which SCell that beam failure occurs based on the SCell corresponding to the detected PRACH.

The base station determines the SCell and/or the candidate beam information according to the preamble sequence of the detected PRACH signal. Specifically, the association relationship between the SCell and/or the candidate beam information and the preamble sequence may also be stored in the base station, then, the SCell and/or the candidate beam information corresponding to the preamble sequence is determined according to the determined preamble sequence of the detected PRACH signal, and the base station may determine the first SCell to which beam failure occurs.

In the embodiments of the present application, the PRACH may adopt a competitive physical layer channel or a noncompetitive dedicated physical layer channel, that is the PRACH may be a competitive PRACH or a noncompetitive PRACH.

If a SCell corresponding to a plurality of candidate beam information, that is, a plurality of BFR-RSs, when beam failure occurs to the SCell, the UE may select one or more BFR-RSs from the plurality of BFR-RSs and transmit the one or more BFR-RSs to the corresponding PRACH. When detecting the PRACH corresponding to the BFR-RS of a certain SCell, the base station may determine that beam failure occurs to the SCell, and meanwhile, it is known that the BFR-RS is a new candidate beam reported by the UE.

The base station may transmit a beam failure recovery response by using the new candidate beam reported by the UE.

In the embodiments of the present application, the UE may report the information of beam failure recovery to the base station through the PRACH, so that the base station performs beam failure recovery of the first SCell after detecting the information of beam failure recovery.

### Embodiment 4.

Based on each of the above-mentioned embodiments, in the embodiments of the present application, the step that the information of beam failure recovery is reported to the base station through the PUCCH includes: the information of beam failure recovery is reported to the base station through the PUCCH on a periodic scheduling resource configured for the PUCCH carrying the information of beam failure recovery by the base station.

Optionally, the terminal reports the information of beam failure recovery to the base station through the PUCCH on a PUCCH resource carrying the information of beam failure recovery, configured for the SCell by the base station.

A terminal may be configured with a plurality of PUCCH resources, each PUCCH resource corresponds to different physical resources, transmission powers, load capacities and load types. A PUCCH transmitting beam is configured by a network. Compared with the PRACH, the PUCCH embodies higher reporting capacity and flexibility. When the information of beam failure recovery is reported to the base station through the PUCCH, the information of beam failure recovery may carry more information such as a plurality of candidate beams and beam quality.

The base station preconfigures the periodic scheduling resource for the PUCCH carrying the information of beam failure recovery for the SCell. When the information of beam failure recovery is reported to the base station through the PUCCH, the UE reports the information of beam failure recovery of the first SCell to the base station through the PUCCH on the periodic scheduling resource configured for the PUCCH carrying the information of beam failure recovery by the base station.

In order to ensure that the UE may report the information of beam failure recovery to the base station through the PUCCH to realize beam failure recovery of the first SCell, preferably, the base station needs to preconfigure a scheduling resource for the SCell, an occasion that the base station preconfigures the scheduling resource for the SCell is selected before the UE reports the information of beam failure recovery, that is, before the base station detects the information, reported by the UE, of beam failure recovery. Preferably, if configuration for the SCell is performed when beam failure does not occur to the SCell, the base station preconfigures a channel resource for performing beam failure recovery on a corresponding cell for each SCell, so that it is ensured that the UE may report the information of beam failure recovery through the configured channel resource when beam failure occurs to the first SCell.

A mode that the UE transmits the information of beam failure recovery on the periodic scheduling resource configured by the base station may be regarded as a transmitting mode similar to a transmitting SR (Scheduling Request).

Optionally, the base station detects the information of beam failure recovery on the periodic scheduling resource for the PUCCH carrying the information of beam failure recovery, configured for the first SCell. It is assumed that the base station configures different scheduling resources for the PUCCH for different SCells, the base station may also determine the SCell to which transmitting beam failure occurs according to the scheduling resources for the PUCCH.

Optionally, the base station detects the information of beam failure recovery on the periodic scheduling resource for the PUCCH carrying the information of beam failure recovery, configured for the first SCell, and determines information indicating that a beam failure event occurs to the first SCell and/or candidate beam information in the detected information of beam failure recovery.

The information of beam failure recovery includes reference signal indication information corresponding to a candidate beam.

The reference signal indication information corresponding to the candidate beam is used for indicating a candidate beam of which a channel instruction meets a preset requirement. Optionally, the reference signal indication information corresponding to the candidate beam is the reference signal on the first SCell.

In the embodiments of the present application, if there is at least one SCell to which beam failure occurs, the information, reported to the base station by the UE, of beam failure recovery may also include L-bit information which may indicate beam failure reporting of L SCells in a bitmap mode, where the bitmap mode means that it is indicated that beam failure occurs to the SCell when a position corresponding to bit is 1 and it is indicated that beam failure does not occur to the SCell when the position corresponding to bit is 0, or it is indicated that beam failure occurs to the SCell when the position corresponding to bit is 0 and it is indicated that beam failure does not occur to the SCell when the position corresponding to bit is 1.

Preferably, L is the maximum number of the SCells when beam failure reporting is performed.

In the embodiments of the present application, the UE may report the information of beam failure recovery to the base station through the PUCCH, so that the base station performs beam failure recovery of the first SCell after detecting the information of beam failure recovery.

### Embodiment 5.

Based on each of the above-mentioned embodiments, in the embodiments of the present application, the step that the information of beam failure recovery is reported to the base station through the PUSCH based on configured grant includes at least one of the following steps: the information of beam failure recovery is reported to the base station through a MAC-CE; the information of beam failure recovery is reported to the base station through a RRC (Radio Resource Control) signaling; and the information of beam failure recovery is reported to the base station through semi-persistent CSI (Channel State Information).

When the information of beam failure recovery is reported to the base station through the PUSCH based on configured grant, one or more of a mode of performing reporting through the MAC-CE, a mode of performing reporting through the RRC signaling and a mode of performing reporting through the semi-persistent CSI is adopted.

The mode of performing reporting through the MAC-CE may be a mode that the UE transmits beam failure reporting of the first SCell through the MAC-CE carried in the PUSCH based on configured grant; the mode of performing reporting through the RRC signaling may be a mode that the UE transmits beam failure reporting of the SCell through increasing a beam recovery request indication field of the SCell in RRC configuration information of the PUSCH scheduled based on configured grant; and the mode of performing reporting through the semi-persistent CSI may be a mode that the UE transmits beam failure reporting of the SCell through a semi-persistent CSI-RS (SP CSI-RS) carried in the PUSCH based on configured grant.

Correspondingly, the base station realizes the detection of the information of beam failure recovery through the PUSCH based on configured grant in one or more corresponding modes in a mode of detecting the information of beam failure recovery in the MAC-CE, a mode of detecting the information of beam failure recovery in the RRC signaling and a mode of detecting the information of beam failure recovery in the semi-persistent CSI.

In the embodiment of the present application, if there is at least one SCell to which beam failure occurs, the information, reported to the base station by the UE, of beam failure recovery may also include L-bit information which may indicate beam failure reporting of L SCells in a bitmap mode, where the bitmap mode means that it is indicated that beam failure occurs to the SCell when a position corresponding to bit is 1 and it is indicated that beam failure does not occur to the SCell when the position corresponding to bit is 0, or it is indicated that beam failure occurs to the SCell when the position corresponding to bit is 0 and it is indicated that beam failure does not occur to the SCell when the position corresponding to bit is 1.

Preferably, L is the maximum number of the SCells when beam failure reporting is performed.

In the embodiments of the present application, the UE may report the information of beam failure recovery to the base station through the PUSCH based on configured grant, so that the base station performs beam failure recovery of the first SCell after detecting the information of beam failure recovery.

### Embodiment 6.

Based on each of the above-mentioned embodiments, in the embodiments of the present application, if the information of beam failure recovery includes candidate beam information, and the candidate beam information includes a reference signal indicating a candidate beam of the first SCell, the step that the information of beam failure recovery is reported to the base station through the SRS corresponding to the first SCell and used for performing beam failure recovery includes: a signal is transmitted to the base station by using a SRS associated with the reference signal indicating the candidate beam of the first SCell.

When the information of beam failure recovery is reported to the base station through the SRS corresponding to the first SCell and used for performing beam failure recovery, the SRS carries the information of beam failure recovery, and the SRS is associated with information indicating that a beam failure event occurs to the SCell. If the information of beam failure recovery includes the candidate beam information, and the candidate beam information includes the reference signal indicating the candidate beam of the first SCell, the UE transmits the signal to the base station by using the SRS associated with the reference signal indicating the candidate beam of the first SCell.

An association relationship between the reference signal indicating the candidate beam and the SRS may be preconfigured in the UE, and therefore, the UE may transmit the signal to the base station by using the SRS associated with the reference signal indicating the candidate beam of the first SCell.

The base station detects the information of beam failure recovery by using the SRS associated with the reference signal indicating the candidate beam of the first SCell.

Specifically, if the base station receives a SRS and the SRS is associated with a reference signal indicating a candidate beam, the reference signal indicating the candidate beam may be expressed as BFR-RS, the base station determines that beam failure occurs to the SCell corresponding to the reference signal indicating the candidate beam, and the candidate beam corresponding to the reference signal indicating the candidate beam reported by the UE is determined.

In addition to the above-mentioned mode, in the embodiment of the present application, the step that the information of beam failure recovery is reported to the base station through the SRS corresponding to the first SCell and used for performing beam failure recovery includes: a scrambling sequence of the SRS is generated according to the first SCell, the SRS is scrambled by using the scrambling sequence, and the obtained scrambling sequence, serving as the information of beam failure recovery, of the SRS is transmitted to the base station; or a modulation mode of the SRS is determined according to the first SCell, the SRS is modulated by using the modulation mode, and the obtained modulation information, serving as the information of beam failure recovery, of the SRS is transmitted to the base station.

When the information of beam failure recovery is reported to the base station by using the SRS corresponding to the first SCell and used for performing beam failure recovery, any one of a mode that the SRS is reported after being scrambled by the scrambling sequence generated by the first SCell and a mode that the SRS is reported after being modulated in the modulation mode determined by the first SCell is adopted.

The scrambling sequence associated with a SCell may be preconfigured in the UE, different SCells may correspond to different scrambling sequences, and therefore, the UE may generate the scrambling sequence of the associated SRS according to the first SCell and scrambles the SRS by using the scrambling sequence and then transmits the scrambled SRS to the base station.

The base station determines the information of beam failure recovery according to the scrambling sequence of the detected SRS. For example, the base station receives the scrambled SRS, and the first SCell to which beam failure occurs may be determined according to the scrambling sequence of the SRS and the stored association relationship between the SCell and the scrambling sequence.

A modulation mode corresponding to a SCell may be configured in the UE, different SCells may correspond to different modulation modes, and therefore, the UE may generate the modulation mode of the SRS according to the first SCell, modulate the SRS in the modulation mode, and then, transmit the modulated SRS to the base station.

The base station determines the information of beam failure recovery according to the modulation information of the detected SRS. For example, the base station may determine the modulation mode corresponding to the SRS after detecting the modulated SRS, thereby determining the first SCell to which beam failure occurs.

A scrambling sequence associated with the candidate beam for beam failure recovery of the first SCell may be preconfigured in the UE, different SCells may correspond to different scrambling sequences, and therefore, the UE may generate the scrambling sequence of the associated SRS according to the candidate beam for beam failure recovery of the first SCell, scramble the SRS by using the scrambling sequence, and then, transmit the scrambled SRS to the base station.

The base station determines the information of beam failure recovery according to the scrambling sequence of the detected SRS. For example, the base station receives the scrambled SRS, and the first SCell to which beam failure occurs may be determined according to the scrambling sequence of the SRS and the stored association relationship between the candidate beam for beam failure recovery of the first SCell and the scrambling sequence.

A modulation mode corresponding to the candidate beam for beam failure recovery of the first SCell may be configured in the UE, different candidate beams for beam failure recovery of the first SCell may correspond to different modulation modes, and therefore, the UE may generate the modulation mode of the SRS according to the candidate beam for beam failure recovery of the first SCell, modulate the SRS in the modulation mode, and then, transmit the modulated SRS to the base station.

The base station determines the information of beam failure recovery according to the modulation information of the detected SRS. For example, the base station may determine the modulation mode corresponding to the SRS after detecting the modulated SRS, thereby determining the candidate beam for beam failure recovery of the first SCell to which beam failure occurs.

In the embodiment of the present application, the UE may report the information of beam failure recovery to the base station through the SRS corresponding to the first SCell and used for performing beam failure recovery, so that the base station performs beam failure recovery of the first SCell after detecting the information of beam failure recovery.

### Embodiment 7.

Based on each of the above-mentioned embodiments, in the embodiments of the present application, the step that the target reporting mode for beam failure of the first SCell is determined includes at least one of the following steps: the target reporting mode for beam failure is determined according to whether the first SCell supports an uplink; the target reporting mode for beam failure is determined according to whether beam failure occurs to a second cell corresponding to the first SCell and used for performing beam failure recovery; the target reporting mode for beam failure is determined according to whether the base station transmits an indication signaling for a beam failure reporting mode; the target reporting mode for beam failure is determined according to the indication signaling, transmitted by the base station, for the beam failure reporting mode; the target reporting mode for beam failure is determined according to the priority of the predefined beam failure reporting mode; and the target reporting mode for beam failure is determined according to whether the base station configures an associated PRACH resource for performing beam failure recovery for the first SCell.

At least one mode of determining the target reporting mode for beam failure of the first SCell in the embodiments of the present application may be understood as a criterion stored in the UE and used for determining the reporting mode for beam failure of the SCell.

In the embodiments of the present application, when the UE determines the target reporting mode for beam failure according to whether the base station transmits the indication signaling for the beam failure reporting mode, the base station may transmit or not transmit the indication signaling to the UE. If the UE determines that the base station transmits the indication signaling for the beam failure reporting mode, the target reporting mode may be determined according to the indication signaling, transmitted by the base station, for the beam failure reporting mode, and a default reporting mode may be adopted as the target reporting mode.

If the target reporting mode is determined according to the indication signaling transmitted by the base station when the UE determines that the indication signaling, transmitted by the base station, for the beam failure reporting mode is received, at the moment, an operation process of the UE may be the same as the process that the target reporting mode for beam failure is determined according to the indication signaling, transmitted by the base station, for the beam failure reporting mode. At the moment, the step that the target reporting mode for beam failure of the first SCell includes: the target reporting mode for beam failure is determined according to whether the base station transmits the indication signaling for the beam failure reporting mode, or the target reporting mode for beam failure is determined according to the indication signaling, transmitted by the base station, for the beam failure reporting mode.

That is, the step that the UE determines the target reporting mode for beam failure of the first SCell includes at least two of the following modes.

One mode: the step that the target reporting mode for beam failure of the first SCell is determined includes at least one of the following steps: the target reporting mode for beam failure is determined according to whether the first SCell supports an uplink; the target reporting mode for beam failure is determined according to whether beam failure occurs to a second cell corresponding to the first SCell and used for performing beam failure recovery; the target reporting mode for beam failure is determined according to whether the base station transmits an indication signaling for a beam failure reporting mode, at the moment, the base station may transmit or not transmit the indication signaling to the UE; the target reporting mode for beam failure is determined according to the priority of the predefined beam failure reporting mode; and the target reporting mode for beam failure is determined according to whether the base station configures an associated PRACH resource for performing beam failure recovery for the first SCell.

The other mode: the step that the target reporting mode for beam failure of the first SCell is determined includes at least one of the following steps: the target reporting mode for beam failure is determined according to whether the first SCell supports an uplink; the target reporting mode for beam failure is determined according to whether beam failure occurs to a second cell corresponding to the first SCell and used for performing beam failure recovery; the target reporting mode for beam failure is determined according to the indication signaling, transmitted by the base station, for the beam failure reporting mode, at the moment, the base station is certain to transmit the indication signaling to the UE; the target reporting mode for beam failure is determined according to the priority of the predefined beam failure reporting mode; and the target reporting mode for beam failure is determined according to whether the base station configures an associated PRACH resource for performing beam failure recovery for the first SCell.

In the embodiment of the present application, the UE determines the target reporting mode for beam failure of the first SCell according to at least one mode, and reports the information of beam failure recovery to the base station according to the target reporting mode, so that the base station performs beam failure recovery of the first SCell after detecting the information of beam failure recovery.

### Embodiment 8.

The target reporting mode for beam failure of the first SCell may include bearing modes and/or cells adopted when beam failure reporting of the first SCell is performed. Based on each of the above-mentioned embodiments, in the embodiment of the present application, if the target reporting mode for beam failure of the first SCell includes the bearing modes adopted when beam failure reporting of the first SCell is performed, the step that the target reporting mode for beam failure is determined according to whether the first SCell supports the uplink includes: if the first SCell supports the uplink, a bearing mode in the target reporting mode for beam failure includes a predefined first bearing mode; and if the first SCell does not support the uplink, a bearing mode in the target reporting mode for beam failure includes a predefined second bearing mode.

The base station may preconfigure an uplink and/or a downlink for a SCell, and therefore, the base station and the UE may determine whether the first SCell supporting the uplink.

The UE may determine the bearing mode in the target reporting mode for beam failure according to whether the first SCell supports the uplink. If the UE determines that the first SCell supports the uplink, the bearing mode in the target reporting mode for beam failure includes the predefined first bearing mode; and if the UE determines that the first SCell does not support the uplink, the bearing mode in the target reporting mode for beam failure includes the predefined second bearing mode.

The predefined first bearing mode includes one of the following modes: a mode of performing reporting through the PRACH, a mode of performing reporting through the PUSCH based on configured grant and a mode of performing reporting through the SRS corresponding to the first SCell and used for performing beam failure recovery; and the predefined second bearing mode includes a mode of performing reporting through the PUCCH.

Preferably, the predefined first bearing mode includes a mode of performing reporting through the PRACH, and the predefined second bearing mode includes a mode of performing reporting through the PUCCH.

Or, the predefined first bearing mode includes a mode of performing reporting through the PRACH; and the predefined second bearing mode includes reporting modes except the mode of performing reporting through the PRACH.

The predefined first bearing mode and the predefined second bearing mode may be preconfigured in the UE by the base station.

In order to realize beam failure recovery of the first SCell, the base station may preconfigure a channel resource for beam failure recovery for the UE, thereby ensuring that the UE may report the information of beam failure recovery of the first SCell through the configured channel resource. Therefore, an occasion that the base station configures the channel resource for the beam failure recovery for the UE is selected before the UE reports the information of beam failure recovery, that is, before the base station detects the information, reported by the UE, of beam failure recovery. Preferably, the base station preconfigures a channel resource for performing beam failure recovery for each SCell, so that it is ensured that the UE may report the information of beam failure recovery through the configured channel resource when beam failure occurs to the first SCell.

If the target reporting mode for beam failure of the first SCell includes the adopted cells, some optional modes for determining the target reporting mode for beam failure according to whether the first SCell supports the uplink include the modes.

One mode: if the first SCell supports the uplink, the terminal performs beam failure reporting of the first SCell on the SCell in the predefined first bearing mode; and if the first SCell does not support the uplink, the terminal performs beam failure reporting of the first SCell on the SCell in the predefined second bearing mode.

The other mode: if the first SCell supports the uplink, the target reporting mode for beam failure includes a mode of performing beam failure reporting on the first SCell; and if the first SCell does not support the uplink, the target reporting mode for beam failure includes a mode of performing beam failure reporting on the first cell corresponding to the first SCell and used for performing beam failure recovery, where the first cell does not include the first SCell.

The UE may determine the cell adopted in the target reporting mode for beam failure according to whether the first SCell supports the uplink. If the UE determines that the first SCell supports the uplink, the cell adopted in the target reporting mode for beam failure includes the first SCell on which beam failure reporting is performed; and if the UE determines that the first SCell does not support the uplink, the cell adopted in the target reporting mode for beam failure includes the first cell which corresponds to the first SCell and is used for performing beam failure recovery and on which beam failure reporting is performed. It should be noted that in the embodiment of the present application, the first cell does not include the first SCell, for example, the first cell is a PCell, or the first cell is a cell capable of transmitting a PUCCH.

In order to realize beam failure recovery of the first SCell, the base station may preconfigure a channel resource for beam failure recovery on a corresponding cell, thereby ensuring that the UE may report the information of beam failure recovery of the first SCell through the configured channel resource. Therefore, an occasion that the base station configures the channel resource for the beam failure recovery on the corresponding cell is selected before the UE reports the information of beam failure recovery, that is, before the base station detects the information, reported by the UE, of beam failure recovery. Preferably, the base station preconfigures a channel resource for performing beam failure recovery on the corresponding cell for each SCell, so that it is ensured that the UE may report the information of beam failure recovery through the configured channel resource when beam failure occurs to the first SCell.

Specifically, when the base station configures the channel resource for performing beam failure recovery on the corresponding cell, if the first SCell supports the uplink, the channel resource for performing beam failure recovery of the SCell is configured on the first SCell supporting the uplink; and if the first SCell does not support the uplink, the channel resource for performing beam failure recovery of the SCell is configured on the first cell corresponding to the first SCell not supporting the uplink and used for performing beam failure recovery.

When a BFR mechanism of an existing Rel-15 NR system is applied to a SCell, that is, a BFR mechanism on a PCell is directly transferred to the SCell, two scenarios are only met as follows: scenario 1: the PCell is located on a FR1 (FR1 is a frequency band not requiring a BFR), UL (UPLINK) and DL (DOWNLINK) transmission (that is, SCell with UL/DL) may be performed on the SCell; and scenario 2: the PCell is located on a FR2 (FR2 is a frequency band requiring a BFR), the UL and DL transmission (that is, SCell with UL/DL) may be performed on the SCell. Since some SCells do not support the UL, such as the two scenarios described as follows: scenario 3: the PCell is located on the FR1, the DL transmission (that is, DL-only SCell) may be only performed on the SCell; and scenario 4: the PCell is located on the FR2, the DL transmission (that is, DL-only SCell) may be only performed on the SCell, at the moment, the mode that the BFR mechanism is transferred to the SCell will not be suitable for the scenario 3 and the scenario 4. In the embodiment of the present application, the corresponding target reporting mode is determined according to whether the first SCell supports the uplink, and thus, beam failure recovery of the first SCell may also be implemented in the scenario 3 and the scenario 4.

In the embodiments of the present application, the UE determines the target reporting mode for beam failure according to whether the first SCell supports the uplink, and reports the information of beam failure recovery to the base station according to the target reporting mode, so that the base station performs beam failure recovery of the first SCell after detecting the information of beam failure recovery.

### Embodiment 9.

Based on each of the above-mentioned embodiments, in the embodiment of the present application, the step that the target reporting mode for beam failure is determined according to whether beam failure occurs to the second cell corresponding to the first SCell and used for performing beam failure recovery includes: if beam failure occurs to the second cell corresponding to the first SCell and used for performing beam failure recovery, a mode of reporting in the predefined first bearing mode on the second cell is determined as the target reporting mode; and if beam failure does not occur to the second cell corresponding to the first SCell and used for performing beam failure recovery, a mode of reporting in the predefined second bearing mode on the second cell is determined as the target reporting mode; or if beam failure occurs to the second cell corresponding to the first SCell and used for performing beam failure recovery and the first SCell supports the uplink, a mode of reporting in the predefined first bearing mode on the first SCell is determined as the target reporting mode; and if beam failure does not occur to the second cell corresponding to the first SCell and used for performing beam failure recovery, a mode of reporting in the predefined second bearing mode on the second cell is determined as the target reporting mode; or if beam failure recovery is being performed on the second cell corresponding to the first SCell and used for performing beam failure recovery, a mode of reporting in the predefined first bearing mode on the second cell is determined as the target reporting mode; and if beam failure recovery is not being performed on the second cell corresponding to the first SCell and used for performing beam failure recovery, a mode of reporting in the predefined second bearing mode on the second cell is determined as the target reporting mode; or if beam failure recovery is being performed on the second cell corresponding to the first SCell and used for performing beam failure recovery and the first SCell supports the uplink, a mode of reporting in the predefined first bearing mode on the first SCell is determined as the target reporting mode; and if beam failure recovery is not being performed on the second cell corresponding to the first SCell and used for performing beam failure recovery, a mode of reporting in the predefined second bearing mode on the second cell is determined as the target reporting mode.

The UE may also determine the target reporting mode for beam failure according to whether beam failure occurs to the cell corresponding to the first SCell and used for performing beam failure recovery, and the cell corresponding to the first SCell for determining the target reporting mode and used for performing beam failure recovery may be referred to as a second cell. The second cell may be a cell indicated to the UE by the base station or predefined in the UE. In a possible mode, the second cell includes a cell which may be reported through a PUCCH.

The UE may detect whether beam failure occurs to a cell and whether beam failure recovery is being performed when beam failure occurs. The process may be implemented by using the related art, the descriptions thereof are omitted in the embodiment of the present application.

The step that the UE determines the target reporting mode for beam failure according to whether beam failure occurs to the second cell corresponding to the first SCell and used for performing beam failure recovery includes one of the following modes.

First mode: if the UE determines that beam failure occurs to the second cell corresponding to the first SCell and used for performing beam failure recovery, the mode of reporting in the predefined first bearing mode on the second cell is determined as the target reporting mode.

If the UE determines that beam failure does not occur to the second cell corresponding to the first SCell and used for performing beam failure recovery, the mode of reporting in the predefined second bearing mode on the second cell is determined as the target reporting mode.

Second mode: if the UE determines that beam failure occurs to the second cell corresponding to the first SCell and used for performing beam failure recovery and the first SCell supports the uplink, the mode of reporting in the predefined first bearing mode on the first SCell is determined as the target reporting mode. If the UE determines that beam failure occurs to the second cell corresponding to the first SCell and used for performing beam failure recovery and the first SCell does not support the uplink, the UE does not perform beam failure reporting of the first SCell, that is, the UE does not report the information of beam failure recovery of the first SCell to the base station.

If the UE determines that beam failure does not occur to the second cell corresponding to the first SCell and used for performing beam failure recovery, the mode of reporting in the predefined second bearing mode on the second cell is determined as the target reporting mode.

Third mode: if the UE determines that beam failure recovery is being performed on the second cell corresponding to the first SCell and used for performing beam failure recovery, that is, the UE determines that beam failure occurs to the second cell and beam failure recovery is being performed on the second cell, the mode of reporting in the predefined first bearing mode on the second cell is determined as the target reporting mode.

If the UE determines that beam failure recovery is not being performed on the second cell corresponding to the first SCell and used for performing beam failure recovery, that is, the UE determines that beam failure occurs to the second cell and beam failure recovery is not being performed on the second cell, the mode of reporting in the predefined second bearing mode on the second cell is determined as the target reporting mode.

Fourth mode: if the UE determines that beam failure recovery is being performed on the second cell corresponding to the first SCell and used for performing beam failure recovery, that is, the UE determines that beam failure occurs to the second cell and beam failure recovery is being performed on the second cell, and the first SCell supports the uplink, the mode of reporting in the predefined first bearing mode on the first SCell is determined as the target reporting mode. If the UE determines that beam failure recovery is being performed on the second cell corresponding to the first SCell and used for performing beam failure recovery and the first SCell does not support the uplink, the UE does not perform beam failure reporting of the first SCell.

If the UE determines that beam failure recovery is not being performed on the second cell corresponding to the first SCell and used for performing beam failure recovery, that is, the UE determines that beam failure occurs to the second cell and beam failure recovery is not being performed on the second cell, the mode of reporting in the predefined second bearing mode on the second cell is determined as the target reporting mode.

The predefined first bearing mode and the predefined second bearing mode in the embodiment of the present application may be the same as those in the above-mentioned embodiment, the descriptions thereof are omitted herein.

Further with the above-mentioned embodiment as an example, the corresponding target reporting mode is determined by considering whether the first SCell supports the uplink in the second and fourth modes in the embodiment of the present application, and thus, beam failure recovery of the first SCell may also be implemented in the scenario 3 and the scenario 4.

In the embodiment of the present application, the UE determines the target reporting mode according to whether beam failure occurs to the second cell corresponding to the first SCell and used for performing beam failure recovery, and reports the information of beam failure recovery to the base station according to the target reporting mode, so that the base station performs beam failure recovery of the first SCell after detecting the information of beam failure recovery.

### Embodiment 10.

Based on each of the above-mentioned embodiments, in the embodiment of the present application, the step that the target reporting mode for beam failure is determined according to whether the base station transmits the indication signaling for the beam failure reporting mode includes: if the base station does not transmit the indication signaling for the beam failure reporting mode, the predefined first reporting mode is determined as the target reporting mode; and if the base station transmits the indication signaling for the beam failure reporting mode, the target reporting mode is determined according to the indication signaling, transmitted by the base station, for the beam failure reporting mode.

If the UE determines the target reporting mode for beam failure according to whether the base station transmits the indication signaling for the beam failure reporting mode, for the base station, the base station may transmit or not transmit the indication signaling for the beam failure reporting mode to the UE.

If the UE does not receive the indication signaling, transmitted by the base station, for the beam failure reporting mode, it is determined that the base station does not transmit the indication signaling for the beam failure reporting mode, and the UE determines the predefined first reporting mode as the target reporting mode. The predefined first reporting mode may be a mode of performing reporting on a PCell through a PRACH or other reporting modes in the present application.

If the UE receives the indication signaling, transmitted by the base station, for the beam failure reporting mode, it is determined that the base station transmits the indication signaling for the beam failure reporting mode, and the UE determines the target reporting mode according to the indication signaling, transmitted by the base station, for the beam failure reporting mode.

The indication signaling, transmitted by the base station, for the beam failure reporting mode includes indication information used for indicating the beam failure reporting mode and may further include configuration information, the configuration information includes configuration information of the channel resource for performing beam failure recovery, and the UE may report the information of beam failure recovery of the first SCell through the channel resource configured in the configuration information.

In the embodiment of the present application, the UE determines the target reporting mode according to whether the base station transmits the indication signaling for the beam failure reporting mode, and reports the information of beam failure recovery to the base station according to the target reporting mode, so that the base station performs beam failure recovery of the first SCell after detecting the information of beam failure recovery.

### Embodiment 11.

Based on each of the above-mentioned embodiments, in the embodiment of the present application, the step that the target reporting mode is determined according to the indication signaling, transmitted by the base station, for the beam failure reporting mode includes at least one of the following modes: the target reporting mode is determined according to indication information used for indicating the beam failure reporting mode and included in the indication signaling, transmitted by the base station, for the beam failure reporting mode; the target reporting mode is determined according to indication information used for indicating the beam failure reporting mode on the first SCell and included in the indication signaling, transmitted by the base station, for the beam failure reporting mode; the target reporting mode is determined according to priority information used for indicating the beam failure reporting mode on the first SCell and included in the indication signaling, transmitted by the base station, for the beam failure reporting mode; and the target reporting mode is determined according to whether the indication signaling, transmitted by the base station, for the beam failure reporting mode includes information used for indicating a third cell for performing beam failure recovery of the first SCell.

The UE may also determine the target reporting mode for beam failure according to the indication signaling, transmitted by the base station, for the beam failure reporting mode, and the base station may transmit the indication signaling for each SCell. The step that the UE determines the target reporting mode according to the indication signaling, transmitted by the base station, for the beam failure reporting mode includes one of the following modes.

First mode: the indication signaling, transmitted by the base station, for the beam failure reporting mode includes the indication information used for indicating the beam failure reporting mode, and the UE determines the target reporting mode according to the indication information used for indicating the beam failure reporting mode and included in the indication signaling.

Second mode: the indication signaling, transmitted by the base station, for the beam failure reporting mode includes the indication information used for indicating the beam failure reporting mode on the SCell, and the UE determines the indication information used for indicating the beam failure reporting mode on the first SCell and determines the target reporting mode according to the indication information used for indicating the beam failure reporting mode on the first SCell and included in the indication information.

Third mode: the indication signaling, transmitted by the base station, for the beam failure reporting mode includes the priority information used for indicating the beam failure reporting mode on the SCell, and the UE determines the indication information including the priority information used for indicating the beam failure reporting mode on the first SCell and determines the target reporting mode according to the priority information used for indicating the beam failure reporting mode on the first SCell and included in the indication information.

Specifically, the UE selects a reporting mode with a relatively high priority as the target reporting mode and generally selects a reporting mode with the highest priority as the target reporting mode. When the reporting mode with the relatively high priority may not be achieved or performances may not be guaranteed, the UE selects the reporting mode with the relatively high priority or the highest priority from reporting modes which may be achieved and of which the performances may be guaranteed as the target reporting mode.

For example, the priority information used for indicating the beam failure reporting mode on the first SCell indicates that the priority for reporting on a PCell through a PUCCH is higher than that for reporting on the first SCell through a PRACH. The UE determines that the mode of performing reporting on the PCell through the PUCCH as the target reporting mode. If the mode of performing reporting on the PCell through the PUCCH may not be achieved or the performances may not be guaranteed, the UE determines the mode of performing reporting with a relatively low priority on the first SCell through the PRACH as the target reporting mode.

Further with the above-mentioned embodiment as an example, during beam failure recovery performed by reporting through the PUCCH, a possible mode is that reporting is performed on the PCell through the PUCCH, and a beam failure recovery response from the base station is received on the PCell or the SCell. However, when beam failure occurs to the PCell, the UE may not perform beam failure reporting through the PCell to result in incapability of guaranteeing the performances in the above-mentioned scenarios 2 and 4. In the present mode, when the mode of performing reporting on the PCell may not be achieved or the performances may not be guaranteed, other reporting modes with relatively low priorities are adopted, and thus, beam failure recovery of the first SCell may be still implemented even if the performances may not be guaranteed in the scenarios 2 and 4.

Fourth mode: the indication signaling, transmitted by the base station, for the beam failure reporting mode includes the information used for indicating a cell used for performing beam failure recovery of the first SCell, the cell included in the indication signaling transmitted by the base station may be referred to as a third cell, and the UE determines the indication information including the information used for indicating the third cell for performing beam failure recovery of the first SCell and determines the target reporting mode according to the information used for indicating the third cell for performing beam failure recovery of the first SCell and included in the indication information.

The step that the target reporting mode is determined according to whether the indication signaling, transmitted by the base station, for the beam failure reporting mode includes the information used for indicating the third cell for performing beam failure recovery of the first SCell includes: if the indication signaling, transmitted by the base station, for the beam failure reporting mode does not include the information used for indicating the third cell for performing beam failure recovery of the first SCell, the predefined second reporting mode is determined as the target reporting mode; and the predefined second reporting mode may be a mode of performing reporting on a PCell through a PRACH or other reporting modes provided in the present application.

If the indication signaling, transmitted by the base station, for the beam failure reporting mode includes the information used for indicating the third cell for performing beam failure recovery of the first SCell, the target reporting mode is determined according to the indicated third cell.

The step that the target reporting mode is determined according to the indicated third cell includes: if the third cell supports PUCCH transmission, a mode of performing reporting through a PUCCH of the third cell is determined as the target reporting mode; if the third cell does not support PUCCH transmission, a mode of performing reporting through a PRACH of the third cell is determined as the target reporting mode.

The third cell for performing reporting through the PUCCH may be a PCell or other SCells, and the third cell for performing reporting through the PRACH may be the first SCell or other SCells.

It should be noted that the process that the target reporting mode for beam failure is determined according to the indication signaling, transmitted by the base station, for the beam failure reporting mode in the embodiment of the present application may be directly applied to the step that the target reporting mode is determined according to the indication signaling, and in this process, the base station is certain to transmit the indication signaling for the beam failure reporting mode to the UE. It may also be applied to the step that the target reporting mode is determined according to whether the base station transmits the indication signaling, and in this process, the base station may transmit or not transmit the indication signaling for the beam failure reporting mode to the UE.

In the embodiments of the present application, the UE determines the target reporting mode according to whether the indication signaling, transmitted by the base station, for the beam failure reporting mode, and reports the information of beam failure recovery to the base station according to the target reporting mode, so that the base station performs beam failure recovery of the first SCell after detecting the information of beam failure recovery.

### Embodiment 12.

Based on each of the above-mentioned embodiments, in the embodiment of the present application, if the UE stores a priority of a predefined beam failure reporting mode, the UE may determine the target reporting mode for beam failure according to the priority of the predefined beam failure reporting mode.

The priority of the predefined beam failure reporting mode may directly include the priority information used for indicating the beam failure reporting mode and the priority information of the first cell corresponding to the first SCell and used for performing beam failure recovery.

If the priority information of the first cell corresponding to the first SCell and used for performing beam failure recovery is included, optionally, the UE determines the target reporting mode according to the type of the first cell. For example, if the first cell is a PCell or a SCell supporting PUCCH transmission, a mode of performing reporting on the first cell through a PUCCH or a mode of performing reporting through a PUSCH based on configured grant is used as the target reporting mode. If the first cell is the first SCell or a SCell which does not suport the PUCCH transmission, a mode of performing reporting on the first cell through the PRACH is used as the target reporting mode.

Specifically, the process that the UE may determine the target reporting mode according to the priority of the predefined beam failure reporting mode is similar to the above-mentioned process that the target reporting mode is determined according to the priority information used for indicating the beam failure reporting mode on the first SCell and included in the indication signaling, the descriptions thereof are omitted in the embodiment of the present application.

If the UE determines the target reporting mode according to whether the base station configures an associated PRACH resource for performing beam failure recovery for the first SCell. The step that the target reporting mode for beam failure is determined according to whether the base station configures the associated PRACH resource for performing beam failure recovery for the first SCell includes: if the base station configures the associated PRACH resource for performing beam failure recovery for the first SCell, the bearing mode in the target reporting mode for beam failure includes a mode of performing reporting through the PRACH; and if the base station does not configure the associated PRACH resource for performing beam failure recovery for the first SCell, the bearing mode in the target reporting mode for beam failure includes a predefined third bearing mode, and the predefined third bearing mode includes reporting modes except the mode of performing reporting through the PRACH.

The base station may configure or not configure a PRACH resource associated with a SCell and used for performing beam failure recovery for the SCell.

If the base station configures the associated PRACH resource for performing beam failure recovery for the SCell, an occasion that the base station configures the associated PRACH resource for performing beam failure recovery for the SCell is selected before the UE reports the information of beam failure recovery, that is, before the base station detects the information, reported by the UE, of beam failure recovery. Preferably, the base station preconfigures the associated PRACH resource for performing beam failure recovery for each SCell so as to ensure that the UE may report the information of beam failure recovery through the configured PRACH resource when beam failure occurs to the first SCell.

If the UE determines that the base station configures the associated PRACH resource for performing beam failure recovery for the first SCell, the bearing mode in the target reporting mode for beam failure includes the mode of performing reporting through the PRACH.

If the UE determines that if the base station does not configure the associated PRACH resource for performing beam failure recovery for the first SCell, the bearing mode in the target reporting mode for beam failure includes the predefined third bearing mode, and the predefined third bearing mode at least does not include the mode of performing reporting through the PRACH.

The PRACH resource may be a competitive PRACH resource or a noncompetitive PRACH resource, and a type of a SCell resource is not limited.

In the embodiments of the present application, the UE determines the target reporting mode according to the priority of the predefined beam failure reporting mode or according to whether the base station configures the associated PRACH resource for performing beam failure recovery for the first SCell, and reports the information of beam failure recovery to the base station, so that the base station performs beam failure recovery of the first SCell after detecting the information of beam failure recovery.

### Embodiment 13.

Based on each of the above-mentioned embodiments, in the embodiments of the present application, Fig. 4 is a schematic diagram showing a beam failure recovery process provided in the embodiment of the present application. The process includes the following steps.

S401: a base station detects information, reported by a UE serving as a user terminal, of beam failure recovery, where the information of beam failure recovery includes information indicating that a beam failure event occurs to a first SCell and/or candidate beam information.

The beam failure recovery method provided by the embodiment of the present application is applied to a base station.

The base station may detect the information, reported by the UE, of beam failure recovery, and determine the information indicating that the beam failure event occurs to the first SCell and/or the candidate beam information.

S402: beam failure recovery of the first SCell is performed according to the detected information indicating that the beam failure event occurs to the first SCell and/or the candidate beam information.

In the embodiments of the present application, the base station performs beam failure recovery of the first SCell after detecting the information of beam failure recovery.

### Embodiment 14.

Based on each of the above-mentioned embodiments, in the embodiments of the present application, the step that the information, reported by the UE, of beam failure recovery is detected includes at least one of the following steps: the information of beam failure recovery is detected through a PRACH; the information of beam failure recovery is detected through a PUCCH; the information of beam failure recovery is detected through a PUSCH based on configured grant; and the information of beam failure recovery is detected through a SRS corresponding to the first SCell and used for performing beam failure recovery.

Further, the step that the information, reported by the UE, of beam failure recovery is detected includes: the information of beam failure recovery is detected on the first SCell; and/or the information of beam failure recovery is detected on a first cell corresponding to the first SCell and used for performing beam failure recovery.

Further, the step that the information of beam failure recovery is detected through the PRACH includes: a PRACH signal is detected on a PRACH occasion resource capable of detecting the information of beam failure recovery of the first SCell.

Further, if the information of beam failure recovery is detected through the PRACH, before the step that beam failure recovery of the first SCell is detected according to the detected information indicating that the beam failure event occurs to the first SCell and/or the candidate beam information, the method further includes a step that: the candidate beam information is determined according to a preamble sequence of the detected PRACH signal.

Further, if the information of beam failure recovery is detected through the PUCCH, before the step that the information, reported by the UE, of beam failure recovery is detected, the method further includes a step that: a periodic scheduling resource for the PUCCH carrying the information of beam failure recovery is configured for a SCell.

Further, the step that the information of beam failure recovery is detected through the PUCCH includes: the information of beam failure recovery is detected on the periodic scheduling resource for the PUCCH carrying the information of beam failure recovery, configured for the first SCell.

Further, if the information of beam failure recovery includes the candidate beam information, the candidate beam information includes reference signal indication information corresponding to a candidate beam.

Further, the step that the information of beam failure recovery is detected through the PUSCH based on configured grant includes at least one of the following steps: the information of beam failure recovery in a MAC-CE is detected; the information of beam failure recovery in a RRC signaling is detected; and the information of beam failure recovery in semi-persistent CSI is detected.

Further, the step that the information of beam failure recovery is detected through the SRS corresponding to the first SCell and used for performing beam failure recovery includes: the information of beam failure recovery is detected by using a SRS associated with a reference signal indicating the candidate beam of the first SCell.

Further, the step that the information of beam failure recovery is detected through the SRS corresponding to the first SCell and used for performing beam failure recovery includes: the information of beam failure recovery is determined according to a scrambling sequence of the detected SRS; or the information of beam failure recovery is determined according to modulation information of the detected SRS.

Further, before the step that the information, reported by the UE, of beam failure recovery is detected, the method further includes a step that: an indication signaling for a beam failure reporting mode is transmitted to the UE.

Further, the step that the indication signaling for the beam failure reporting mode is transmitted to the UE includes: an indication signaling including indication information used for indicating the beam failure reporting mode is transmitted to the UE; or an indication signaling including indication information used for indicating the beam failure reporting mode on the SCell is transmitted to the UE; or an indication signaling including priority information used for indicating the beam failure reporting mode on the SCell is transmitted to the UE; or an indication signaling including information used for indicating a third cell for performing beam failure recovery of the SCell is transmitted to the UE.

Further, before the step that the information, reported by the UE, of beam failure recovery is detected, the method further includes a step that: an associated PRACH resource for beam failure recovery is configured for the SCell.

Further, before the step that the information, reported by the UE, of beam failure recovery is detected, the method further includes the steps that: if the first SCell supports an uplink, a channel resource for beam failure recovery is configured on the first SCell; and if the first SCell does not support an uplink, a channel resource for beam failure recovery is configured on the first cell corresponding to the first SCell and used for performing beam failure recovery.

### Embodiment 15. Embodiment 15 is not part of the present invention and is present for illustration purposes only.

Based on each of the above-mentioned embodiments, the embodiments of the present application further provide a UE, as shown in Fig. 5, including a processor 501, a memory 502 and a transceiver 503.
the memory 502 is configured to store computer instructions.
the processor 501 is configured to enable the computer instructions in the memory 502 to run so as to implement the following processes: a target reporting mode for beam failure of a first SCell is determined; and information of beam failure recovery is reported to a base station by the transceiver 503 by using the target reporting mode if the UE detects that beam failure occurs to the first SCell.

Based on the same inventive concept, the embodiment of the present application further provides a UE. Since the principle that the above-mentioned UE solves problems is similar to that of the beam failure recovery method, the implementation of the above-mentioned UE may refer to that of the method, the descriptions thereof are omitted herein.

In Fig. 5, a bus architecture (represented by a bus 500) is shown. The bus 500 may include any number of buses and bridges which are interconnected with each other. By using the bus 500, various circuits of one or more processors represented by the processor 501 and a memory represented by the memory 502 are linked together. The bus 500 is also capable of linking various other circuits such as a peripheral equipment, a voltage stabilizer and a power management circuit together, which is known by the skilled in the art. Therefore, the further description of the bus is omitted herein. A bus interface 504 is provided with an interface between the bus 500 and the transceiver 503. The transceiver 503 may be one element or a plurality of elements, such as a plurality of receivers and transmitters, and is provided with units used for performing communication with various other apparatuses on a transmission medium. For example, the transceiver 503 receives external data from other equipment. The transceiver 503 is used for transmitting data processed by the processor 501 to other equipment. Depending on the property of a computing system, a user interface 505 such as a keypad, a display, a loudspeaker, a microphone and an operating lever may also be provided.

The processor 501 takes charge of managing the bus 500 and regular processing, for example, the above-mentioned general operating system runs. The memory 502 may be used for storing data used when the processor 501 performs operations.

Optionally, the processor 501 may be a Central Processing Unit (CPU), an Application Specific Integrated Circuit (ASIC), a Field-Programmable Gate Array (FPGA) or a Complex Programmable Logic Device (CPLD).

The processor 501 is specifically configured to report the information of beam failure recovery to the base station by the transceiver 503 by using at least one of the following target reporting modes: the information of beam failure recovery is reported to the base station through a PRACH; the information of beam failure recovery is reported to the base station through a PUCCH; the information of beam failure recovery is reported to the base station through a PUSCH based on configured grant; and the information of beam failure recovery is reported to the base station through a SRS corresponding to the first SCell and used for performing beam failure recovery.

The processor 501 is specifically configured to report, by the transceiver 503, the information of beam failure recovery to the base station on the first SCell; and/or report the information of beam failure recovery to the base station on a first cell corresponding to the first SCell and used for performing beam failure recovery.

The processor 501 is specifically configured to determine a preamble sequence of the PRACH by using candidate beam information, generate a PRACH signal by using the preamble sequence, and transmit, by the transceiver 503, the PRACH signal serving as the information of beam failure recovery to the base station if the information of beam failure recovery includes the candidate beam information.

The processor 501 is specifically configured to report, by the transceiver 503, the information of beam failure recovery to the base station through the PUCCH on a periodic scheduling resource configured for the PUCCH carrying the information of beam failure recovery by the base station.

Optionally, the information of beam failure recovery includes reference signal indication information corresponding to a candidate beam.

The processor 501 is specifically configured to report, by the transceiver 503, the information of beam failure recovery to the base station through the PUSCH based on configured grant by using at least one of the following modes: the information of beam failure recovery is reported to the base station through a MAC-CE; the information of beam failure recovery is reported to the base station through a RRC signaling; and the information of beam failure recovery is reported to the base station through semi-persistent CSI.

The processor 501 is specifically configured to transmit a signal to the base station by using a SRS associated with the reference signal of the candidate beam indicating the first SCell if the information of beam failure recovery includes candidate beam information, and the candidate beam information includes a reference signal of a candidate beam indicating the first SCell.

The processor 501 is specifically configured to generate a scrambling sequence of the SRS according to the first SCell, scramble the SRS by using the scrambling sequence, and transmit the obtained scrambling sequence, serving as the information of beam failure recovery, of the SRS, to the base station by the transceiver 503; or determine a modulation mode of the SRS according to the first SCell, modulate the SRS by using the modulation mode, and transmit the obtained modulation information, serving as the information of beam failure recovery, of the SRS, to the base station by the transceiver 503.

The processor 501 is specifically configured to determine the target reporting mode for beam failure of the first SCell by using at least one of the following modes: the target reporting mode for beam failure is determined according to whether the first SCell supports an uplink; the target reporting mode for beam failure is determined according to whether beam failure occurs to a second cell corresponding to the first SCell and used for performing beam failure recovery; the target reporting mode for beam failure is determined according to whether the base station transmits an indication signaling for a beam failure reporting mode; the target reporting mode for beam failure is determined according to the indication signaling, transmitted by the base station, for the beam failure reporting mode; the target reporting mode for beam failure is determined according to the priority of the predefined beam failure reporting mode; and the target reporting mode for beam failure is determined according to whether the base station configures an associated PRACH resource for performing beam failure recovery for the first SCell.

The processor 501 is specifically configured to determine that: if the first SCell supports the uplink, a bearing mode in the target reporting mode for beam failure includes a predefined first bearing mode; and if the first SCell does not support the uplink, a bearing mode in the target reporting mode for beam failure includes a predefined second bearing mode.

The processor 501 is specifically configured to determine that: if the first SCell supports the uplink, the target reporting mode for beam failure includes a mode of performing beam failure reporting on the first SCell; and if the first SCell does not support the uplink, the target reporting mode for beam failure includes a mode of performing beam failure reporting on the first cell corresponding to the first SCell and used for performing beam failure recovery, where the first cell does not include the first SCell.

Optionally, the first cell is a cell capable of transmitting the PUCCH.

If beam failure occurs to the second cell corresponding to the first SCell and used for performing beam failure recovery, a mode of reporting in the predefined first bearing mode on the second cell is determined as the target reporting mode; and if beam failure does not occur to the second cell corresponding to the first SCell and used for performing beam failure recovery, a mode of reporting in the predefined second bearing mode on the second cell is determined as the target reporting mode; or if beam failure occurs to the second cell corresponding to the first SCell and used for performing beam failure recovery and the first SCell supports the uplink, a mode of reporting in the predefined first bearing mode on the first SCell is determined as the target reporting mode; and if beam failure does not occur to the second cell corresponding to the first SCell and used for performing beam failure recovery, a mode of reporting in the predefined second bearing mode on the second cell is determined as the target reporting mode; or if beam failure recovery is being performed on the second cell corresponding to the first SCell and used for performing beam failure recovery, a mode of reporting in the predefined first bearing mode on the second cell is determined as the target reporting mode; and if beam failure recovery is not being performed on the second cell corresponding to the first SCell and used for performing beam failure recovery, a mode of reporting in the predefined second bearing mode on the second cell is determined as the target reporting mode; or if beam failure recovery is being performed on the second cell corresponding to the first SCell and used for performing beam failure recovery and the first SCell supports the uplink, a mode of reporting in the predefined first bearing mode on the first SCell is determined as the target reporting mode; and if beam failure recovery is not being performed on the second cell corresponding to the first SCell and used for performing beam failure recovery, a mode of reporting in the predefined second bearing mode on the second cell is determined as the target reporting mode.

Optionally, the predefined first bearing mode includes one of the following modes: a mode of performing reporting through the PRACH, a mode of performing reporting through the PUSCH based on configured grant, and a mode of performing reporting through the SRS corresponding to the first SCell and used for performing beam failure recovery; and the predefined second bearing mode includes a mode of performing reporting through the PUCCH.

Optionally, the predefined first bearing mode includes a mode of performing reporting through the PRACH; and the predefined second bearing mode includes reporting modes except the mode of performing reporting through the PRACH.

The processor 501 is specifically configured to determine the predefined first reporting mode as the target reporting mode if the base station does not transmit the indication signaling for the beam failure reporting mode; and determine the target reporting mode according to the indication signaling, transmitted by the base station, for the beam failure reporting mode if the base station transmits the indication signaling for the beam failure reporting mode.

The processor 501 is specifically configured to determine the target reporting mode according to indication information used for indicating the beam failure reporting mode and included in the indication signaling, transmitted by the base station, for the beam failure reporting mode; or determine the target reporting mode according to indication information used for indicating the beam failure reporting mode on the first SCell and included in the indication signaling, transmitted by the base station, for the beam failure reporting mode; or determine the target reporting mode according to priority information used for indicating the beam failure reporting mode on the first SCell and included in the indication signaling, transmitted by the base station, for the beam failure reporting mode; or determine the target reporting mode according to whether the indication signaling, transmitted by the base station, for the beam failure reporting mode includes information used for indicating a third cell for performing beam failure recovery of the first SCell.

The processor 501 is specifically configured to determine the predefined second reporting mode as the target reporting mode if the indication signaling, transmitted by the base station, for the beam failure reporting mode does not include the information used for indicating the third cell for performing beam failure recovery of the first SCell; and determine the target reporting mode according to the indicated third cell if the indication signaling, transmitted by the base station, for the beam failure reporting mode includes the information used for indicating the third cell for performing beam failure recovery of the first SCell.

The processor 501 is specifically configured to determine a mode of performing reporting through a PUCCH of the third cell as the target reporting mode if the third cell supports PUCCH transmission; or else, determine a mode of performing reporting through a PRACH of the third cell as the target reporting mode.

The processor 501 is specifically configured to determine that: if the base station configures the associated PRACH resource for performing beam failure recovery for the first SCell, the bearing mode in the target reporting mode for beam failure includes a mode of performing reporting through the PRACH; and if the base station does not configure the associated PRACH resource for performing beam failure recovery for the first SCell, the bearing mode in the target reporting mode for beam failure includes a predefined third bearing mode, and the predefined third bearing mode includes reporting modes except the mode of performing reporting through the PRACH.

### Embodiment 16. Embodiment 16 is not part of the present invention and is present for illustration purposes only.

Based on each of the above-mentioned embodiments, the embodiment of the present application further provides a computer readable storage medium. The computer readable storage medium stores computer programs which may be executed by a UE, and when the programs run on the UE, any one of the above-mentioned embodiments applied to the UE is implemented when the programs are executed by the UE.

The above-mentioned computer readable storage medium may be any available medium or data storage equipment which may be accessed by a processor in the UE, includes, but is not limited to a magnetic memory such as a flexible disk, a hard disk, a magnetic tape and a magnetic optical disk (MO), an optical memory such as a CD, a DVD, a BD and a HVD, and a semiconductor memory such as a ROM, an EPROM, an EEPROM, a nonvolatile memory (NAND FLASH) and a SSD (Solid State Disk).

### Embodiment 17. Embodiment 17 is not part of the present invention and is present for illustration purposes only.

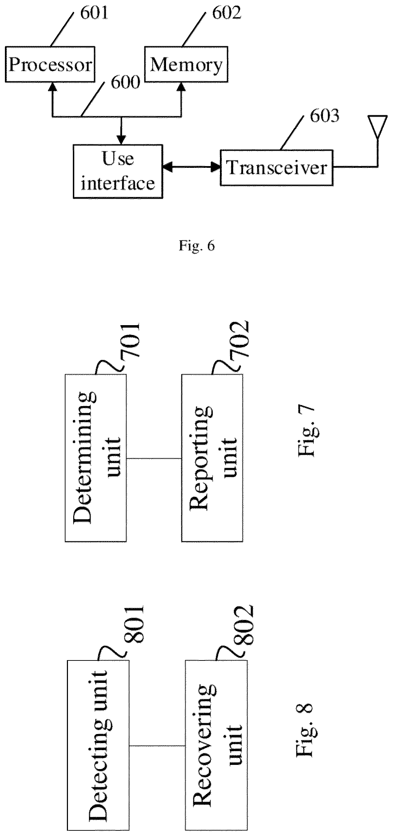

Based on each of the above-mentioned embodiments, the embodiment of the present application further provides a base station, as shown in Fig. 6, including a processor 601, a memory 602 and a transceiver 603.

The memory 602 is configured to store computer instructions.

The processor 601 is configured to enable the computer instructions in the memory 602 to run so as to implement the following processes: information, reported by a UE, of beam failure recovery is detected by the transceiver 603, where the information of beam failure recovery includes information indicating that a beam failure event occurs to a first SCell and/or candidate beam information; and beam failure recovery of the first SCell is performed according to the detected information indicating that the beam failure event occurs to the first SCell and/or the candidate beam information.

Based on the same inventive concept, the embodiment of the present application further provides a base station. Since the principle that the above-mentioned base station solves problems is similar to that of the beam failure recovery method, the implementation of the above-mentioned base station may refer to that of the method, the descriptions thereof are omitted herein.

In Fig. 6, a bus architecture (represented by a bus 600) is shown. The bus 600 may include any number of buses and bridges which are interconnected with each other. By using the bus 600, various circuits of one or more processors represented by the processor 601 and a memory represented by the memory 602 are linked together. The bus 600 is also capable of linking various other circuits such as a peripheral equipment, a voltage stabilizer and a power management circuit together, which is known by the skilled in the art. Therefore, the further description of the bus is omitted herein. A bus interface 604 is provided with an interface between the bus 600 and the transceiver 603. The transceiver 603 may be one element or a plurality of elements, such as a plurality of receivers and transmitters, and is provided with units used for performing communication with various other apparatuses on a transmission medium. Data processed by the processor 601 is transmitted on a wireless medium through an antenna 605, and further, the antenna 605 also receives data and transmits the data to the processor 601.

The processor 601 takes charge of managing the bus 600 and regular processing and is also capable of providing various functions including timing, a peripheral interface, voltage regulation, power management and other control functions. The memory 605 may be used for storing data used when the processor 601 performs operations.

Optionally, the processor 601 may be a CPU, an ASIC, a FPGA or a CPLD.

The processor 601 is specifically configured to detect the information, reported by the UE, of beam failure recovery by the transceiver 603 by using at least one of the following modes: the information of beam failure recovery is detected through a PRACH; the information of beam failure recovery is detected through a PUCCH; the information of beam failure recovery is detected through a PUSCH based on configured grant; and the information of beam failure recovery is detected through a SRS corresponding to the first SCell and used for performing beam failure recovery.

The processor 601 is specifically configured to detect, by the transceiver 603, the information of beam failure recovery on the first SCell; and/or detect the information of beam failure recovery on a first cell corresponding to the first SCell and used for performing beam failure recovery.

The processor 601 is specifically configured to detect, by the transceiver 603, a PRACH signal on a PRACH occasion resource capable of detecting the information of beam failure recovery of the first SCell.

The processor 601 is further configured to determine the candidate beam information according to a preamble sequence of the detected PRACH signal if the information of beam failure recovery is detected through the PRACH.

The processor 601 is further configured to configure, a periodic scheduling resource for the PUCCH carrying the information of beam failure recovery, for a SCell if the information of beam failure recovery is detected through the PUCCH.

The processor 601 is specifically configured to detect, by the transceiver 603, the information of beam failure recovery on the periodic scheduling resource for the PUCCH carrying the information of beam failure recovery, configured for the first SCell.

Optionally, if the information of beam failure recovery includes the candidate beam information, the candidate beam information includes reference signal indication information corresponding to a candidate beam.

The processor 601 is specifically configured to detect, by the transceiver 603, the information of beam failure recovery through the PUSCH based on configured grant by using at least one of the following modes: the information of beam failure recovery in a MAC-CE is detected; the information of beam failure recovery in a RRC signaling is detected; and the information of beam failure recovery in semi-persistent CSI is detected.

The processor 601 is specifically configured to detect, by the transceiver 603, the information of beam failure recovery by using a SRS associated with a reference signal indicating the candidate beam of the first SCell.

The processor 601 is specifically configured to determine the information of beam failure recovery according to a scrambling sequence of the detected SRS; or determine the information of beam failure recovery according to modulation information of the detected SRS.

The processor 601 is further configured to transmit, by the transceiver 603, an indication signaling for a beam failure reporting mode to the UE.

The processor 601 is specifically configured to transmit, by the transceiver 603, an indication signaling including indication information used for indicating the beam failure reporting mode to the UE; or transmit an indication signaling including indication information used for indicating the beam failure reporting mode on the SCell to the UE; or transmit an indication signaling including priority information used for indicating the beam failure reporting mode on the SCell to the UE; or transmit an indication signaling including information used for indicating a third cell for performing beam failure recovery of the SCell to the UE.

The processor 601 is further configured to configure an associated PRACH resource for beam failure recovery for the SCell.

The processor 601 is further configured to configure a channel resource for beam failure recovery on the first SCell if the first SCell supports an uplink; and configure a channel resource for beam failure recovery on the first cell corresponding to the first SCell and used for performing beam failure recovery if the first SCell does not support an uplink.

### Embodiment 18. Embodiment 18 is not part of the present invention and is present for illustration purposes only.

Based on each of the above-mentioned embodiments, the embodiment of the present application further provides a computer readable storage medium. The computer readable storage medium stores computer programs which may be executed by a base station, and when the programs run on the base station, any one of the above-mentioned embodiments applied to the base station is implemented when the programs are executed by the base station.

The above-mentioned computer readable storage medium may be any available medium or data storage equipment which may be accessed by the processor in the base station, includes, but is not limited to a magnetic memory such as a flexible disk, a hard disk, a magnetic tape and a magnetic optical disk (MO), an optical memory such as a CD, a DVD, a BD and a HVD, and a semiconductor memory such as a ROM, an EPROM, an EEPROM, a nonvolatile memory (NAND FLASH) and a SSD (Solid State Disk).

Fig. 7 shows a beam failure recovery apparatus provided by the embodiment of the present application and applied to a UE. The apparatus includes: a determining unit, configured to determine a target reporting mode for beam failure of a first SCell; and a reporting unit, configured to report information of beam failure recovery to a base station by using the target reporting mode if a UE detects that beam failure occurs to the first SCell.

The information of beam failure recovery of the first SCell may include information indicating that a beam failure event occurs to the first SCell and/or candidate beam information and/or beam quality information, detected by the UE, of the first SCell, the information indicating that the beam failure event occurs to the first SCell may include identification information of the first SCell and may also include indication information used for indicating that the beam failure event occurs to the SCell, and the candidate beam information may include candidate beam information selected by the UE (or information of a candidate beam considered to be better in quality by the UE, or information of a candidate beam of which the quality is higher than a certain threshold) and may also include the identification information of the first SCell, where the identification information is used for indicating that the candidate beam is the candidate beam of the first SCell and the like.

The reporting unit is specifically configured to report the information of beam failure recovery to the base station by using at least one of the following target reporting modes: the information of beam failure recovery is reported to the base station through a PRACH; the information of beam failure recovery is reported to the base station through a PUCCH; the information of beam failure recovery is reported to the base station through a PUSCH based on configured grant; and the information of beam failure recovery is reported to the base station through a SRS corresponding to the first SCell and used for performing beam failure recovery.

The reporting unit is specifically configured to report the information of beam failure recovery to the base station on the first SCell; and/or report the information of beam failure recovery to the base station on a first cell corresponding to the first SCell and used for performing beam failure recovery.

The reporting unit is specifically configured to determine a preamble sequence of the PRACH by using candidate beam information, generate a PRACH signal by using the preamble sequence, and transmit the PRACH signal serving as the information of beam failure recovery to the base station if the information of beam failure recovery includes the candidate beam information.

The reporting unit is specifically configured to report the information of beam failure recovery to the base station through the PUCCH on a periodic scheduling resource configured for the PUCCH carrying the information of beam failure recovery by the base station.

Optionally, the information of beam failure recovery includes reference signal indication information corresponding to a candidate beam.

The reporting unit is specifically configured to report the information of beam failure recovery to the base station through the PUSCH based on configured grant by using at least one of the following modes: the information of beam failure recovery is reported to the base station through a MAC-CE; the information of beam failure recovery is reported to the base station through a RRC signaling; and the information of beam failure recovery is reported to the base station through semi-persistent CSI.

The reporting unit is specifically configured to transmit a signal to the base station by using a SRS associated with the reference signal of the candidate beam indicating the first SCell if the information of beam failure recovery includes candidate beam information, and the candidate beam information includes a reference signal of a candidate beam indicating the first SCell.

The reporting unit is specifically configured to generate a scrambling sequence of the SRS according to the first SCell, scramble the SRS by using the scrambling sequence, and transmit the obtained scrambling sequence, serving as the information of beam failure recovery, of the SRS, to the base station; or determine a modulation mode of the SRS according to the first SCell, modulate the SRS by using the modulation mode, and transmit the obtained modulation information, serving as the information of beam failure recovery, of the SRS, to the base station.

The determining unit is specifically configured to determine the target reporting mode for beam failure of the first SCell by using at least one of the following modes: the target reporting mode for beam failure is determined according to whether the first SCell supports an uplink; the target reporting mode for beam failure is determined according to whether beam failure occurs to a second cell corresponding to the first SCell and used for performing beam failure recovery; the target reporting mode for beam failure is determined according to whether the base station transmits an indication signaling for a beam failure reporting mode; the target reporting mode for beam failure is determined according to the indication signaling, transmitted by the base station, for the beam failure reporting mode; the target reporting mode for beam failure is determined according to the priority of the predefined beam failure reporting mode; and the target reporting mode for beam failure is determined according to whether the base station configures an associated PRACH resource for performing beam failure recovery for the first SCell.

The determining unit is specifically configured to determine that: if the first SCell supports the uplink, a bearing mode in the target reporting mode for beam failure includes a predefined first bearing mode; and if the first SCell does not support the uplink, a bearing mode in the target reporting mode for beam failure includes a predefined second bearing mode.

The determining unit is specifically configured to determine that: if the first SCell supports the uplink, the target reporting mode for beam failure includes a mode of performing beam failure reporting on the first SCell; and if the first SCell does not support the uplink, the target reporting mode for beam failure includes a mode of performing beam failure reporting on the first cell corresponding to the first SCell and used for performing beam failure recovery, where the first cell does not include the first SCell.

The first cell is a cell capable of transmitting the PUCCH.

The determining unit is specifically configured to determine a mode of reporting in the predefined first bearing mode on the second cell as the target reporting mode if beam failure occurs to the second cell corresponding to the first SCell and used for performing beam failure recovery; and determine a mode of reporting in the predefined second bearing mode on the second cell as the target reporting mode if beam failure does not occur to the second cell corresponding to the first SCell and used for performing beam failure recovery; or determine a mode of reporting in the predefined first bearing mode on the first SCell as the target reporting mode if beam failure occurs to the second cell corresponding to the first SCell and used for performing beam failure recovery and the first SCell supports the uplink; and determine a mode of reporting in the predefined second bearing mode on the second cell as the target reporting mode if beam failure does not occur to the second cell corresponding to the first SCell and used for performing beam failure recovery; or determine a mode of reporting in the predefined first bearing mode on the second cell as the target reporting mode if beam failure recovery is being performed on the second cell corresponding to the first SCell and used for performing beam failure recovery; and determine a mode of reporting in the predefined second bearing mode on the second cell as the target reporting mode if beam failure recovery is not being performed on the second cell corresponding to the first SCell and used for performing beam failure recovery; or determine a mode of reporting in the predefined first bearing mode on the first SCell as the target reporting mode if beam failure recovery is being performed on the second cell corresponding to the first SCell and used for performing beam failure recovery and the first SCell supports the uplink; and determine a mode of reporting in the predefined second bearing mode on the second cell as the target reporting mode if beam failure recovery is not being performed on the second cell corresponding to the first SCell and used for performing beam failure recovery.

Optionally, the predefined first bearing mode includes one of the following modes: a mode of performing reporting through the PRACH, a mode of performing reporting through the PUSCH based on configured grant, and a mode of performing reporting through the SRS corresponding to the first SCell and used for performing beam failure recovery; and the predefined second bearing mode includes a mode of performing reporting through the PUCCH.

Optionally, the predefined first bearing mode includes a mode of performing reporting through the PRACH; and the predefined second bearing mode includes reporting modes except the mode of performing reporting through the PRACH.

The determining unit is specifically configured to determine the predefined first reporting mode as the target reporting mode if the base station does not transmit the indication signaling for the beam failure reporting mode; and determine the target reporting mode according to the indication signaling, transmitted by the base station, for the beam failure reporting mode if the base station transmits the indication signaling for the beam failure reporting mode.

The determining unit is specifically configured to determine the target reporting mode according to indication information used for indicating the beam failure reporting mode and included in the indication signaling, transmitted by the base station, for the beam failure reporting mode; or determine the target reporting mode according to indication information used for indicating the beam failure reporting mode on the first SCell and included in the indication signaling, transmitted by the base station, for the beam failure reporting mode; or determine the target reporting mode according to priority information used for indicating the beam failure reporting mode on the first SCell and included in the indication signaling, transmitted by the base station, for the beam failure reporting mode; or determine the target reporting mode according to whether the indication signaling, transmitted by the base station, for the beam failure reporting mode includes information used for indicating a third cell for performing beam failure recovery of the first SCell.

The determining unit is specifically configured to determine the predefined second reporting mode as the target reporting mode if the indication signaling, transmitted by the base station, for the beam failure reporting mode does not include the information used for indicating the third cell for performing beam failure recovery of the first SCell; and determine the target reporting mode according to the indicated third cell if the indication signaling, transmitted by the base station, for the beam failure reporting mode includes the information used for indicating the third cell for performing beam failure recovery of the first SCell.

The determining unit is specifically configured to determine a mode of performing reporting through a PUCCH of the third cell as the target reporting mode if the third cell supports PUCCH transmission; or else, determine a mode of performing reporting through a PRACH of the third cell as the target reporting mode.

The determining unit is specifically configured to determine that: if the base station configures the associated PRACH resource for performing beam failure recovery for the first SCell, the bearing mode in the target reporting mode for beam failure includes a mode of performing reporting through the PRACH; and if the base station does not configure the associated PRACH resource for performing beam failure recovery for the first SCell, the bearing mode in the target reporting mode for beam failure includes a predefined third bearing mode, and the predefined third bearing mode includes reporting modes except the mode of performing reporting through the PRACH.

Fig. 8 shows a beam failure recovery apparatus provided by the embodiment of the present application and applied to a base station. The apparatus includes: a detecting unit, configured to detect information, reported by a UE, of beam failure recovery, where the information of beam failure recovery includes information indicating that a beam failure event occurs to a first SCell and/or candidate beam information; and a recovering unit, configured to perform beam failure recovery of the first SCell according to the detected information indicating that the beam failure event occurs to the first SCell and/or the candidate beam information.

The detecting unit is specifically configured to detect the information, reported by the UE, of beam failure recovery by using at least one of the following modes: the information of beam failure recovery is detected through a PRACH; the information of beam failure recovery is detected through a PUCCH; the information of beam failure recovery is detected through a PUSCH based on configured grant; and the information of beam failure recovery is detected through a SRS corresponding to the first SCell and used for performing beam failure recovery.

The detecting unit is specifically configured to detect the information of beam failure recovery on the first SCell; and/or detect the information of beam failure recovery on a first cell corresponding to the first SCell and used for performing beam failure recovery.

The detecting unit is specifically configured to detect a PRACH signal on a PRACH occasion resource capable of detecting the information of beam failure recovery of the first SCell.

The apparatus further includes: a determining unit, configured to determine the candidate beam information according to a preamble sequence of the detected PRACH signal before beam failure recovery of the first SCell is performed according to the detected information indicating that the beam failure event occurs to the first SCell and/or the candidate beam information if the information of beam failure recovery is detected through the PRACH.

The apparatus further includes: a first configuration unit, configured to configure, a periodic scheduling resource for the PUCCH carrying the information of beam failure recovery, for a SCell before the information, reported by the UE, of beam failure recovery is detected if the information of beam failure recovery is detected through the PUCCH.

The detecting unit is specifically configured to detect the information of beam failure recovery on the periodic scheduling resource for the PUCCH carrying the information of beam failure recovery, configured for the first SCell.

If the information of beam failure recovery includes the candidate beam information, the candidate beam information includes reference signal indication information corresponding to a candidate beam.

The detecting unit is specifically configured to detect the information of beam failure recovery through the PUSCH based on configured grant by using at least one of the following modes: the information of beam failure recovery in a MAC-CE is detected; the information of beam failure recovery in a RRC signaling is detected; and the information of beam failure recovery in semi-persistent CSI is detected.

The detecting unit is specifically configured to is detect the information of beam failure recovery by using a SRS associated with a reference signal indicating the candidate beam of the first SCell.

The detecting unit is specifically configured to determine the information of beam failure recovery according to a scrambling sequence of the detected SRS; or determine the information of beam failure recovery according to modulation information of the detected SRS.

The apparatus further includes: a transmitting unit, configured to transmit an indication signaling for a beam failure reporting mode to the UE before the information, reported by the UE, of beam failure recovery is detected.

The transmitting unit is specifically configured to transmit an indication signaling including indication information used for indicating the beam failure reporting mode to the UE; or transmit an indication signaling including indication information used for indicating the beam failure reporting mode on the SCell to the UE; or transmit an indication signaling including priority information used for indicating the beam failure reporting mode on the SCell to the UE; or transmit an indication signaling including information used for indicating a third cell for performing beam failure recovery of the SCell to the UE.

The apparatus further includes: a second configuration unit, configured to configure an associated PRACH resource for beam failure recovery for the SCell before the information, reported by the UE, of beam failure recovery is detected.

The apparatus further includes: a third configuration unit, configured to configure a channel resource for beam failure recovery on the first SCell if the first SCell supports an uplink; configure a channel resource for beam failure recovery on the first cell corresponding to the first SCell and used for performing beam failure recovery if the first SCell does not support an uplink before the information, reported by the UE, of beam failure recovery is detected.

For the embodiments of the system/apparatus, they are basically similar to the embodiments of the method so as to be relatively simply described, and reference can be made to the description of the embodiments of the method for relevant parts.

It should be noted that, herein, relational terms such as first and second are only used to distinguish one entity or operation from another one, but do not necessarily require or imply the presence of any such actual relationship or order between these entities or operations.

It should be understood by the skilled in the art that the embodiments of the present application may provide a method, system or computer program product. Therefore, forms of a complete hardware embodiment, a complete software embodiment or a software and hardware aspect combined embodiment may be adopted in the present application. Moreover, a form of a computer program product executed on one or more computer available storage media (including, but not limited to a magnetic disk memory, a CD-ROM and an optical memory) including computer available program codes may be adopted in the present application.

The present application is described by referring to flow diagrams and/or block diagrams of the method, device (system) and computer program product according to the embodiments of the present application. It should be understood that each flow and/or block in the flow diagrams and/or block diagrams as well as a combination of flows and/or blocks in the flow diagrams and/or block diagrams may be realized by computer program instructions. The computer program instructions may be provided to a general-purpose computer, a special-purpose computer, an embedded processor or processors of other programmable data processing devices to generate a machine, so that an apparatus for realizing specified functions in one or more flows in the flow programs and/or one or more blocks in the block diagrams is generated through the instructions executed by the computer or the processors of other programmable data processing devices.

These computer program instructions may also be stored in a computer readable memory capable of guiding the computer or other programmable data processing devices to work in a specific way, so that the instructions stored in the computer readable memory generate a product including an instruction apparatus, and the instruction apparatus realizes the functions specified in the one or more flows in the flow diagrams and/or one or more blocks in the block diagrams.

These computer program instructions may also be loaded in the computer or other programmable data processing devices, so that a series of operation steps are performed on the computer or other programmable data processing devices to generate processing realized by the computer, and furthermore, the instructions executed on the computer or other programmable data processing devices provide steps for realizing the specified functions in the one or more flows in the flow diagrams and/or one or more blocks in the block diagrams.

## Claims

1. A beam failure recovery method, performed by a User Equipment, UE, the method comprising:
determining (S301), a target reporting mode for beam failure of a first secondary cell, SCell; and
in a case that the UE detects that beam failure occurs to the first SCell, reporting (S302) information of beam failure recovery to a base station corresponding to the first SCell by using the target reporting mode, wherein the information of beam failure recovery comprises information indicating that a beam failure event occurs to the first SCell and candidate beam information, or the information of beam failure recovery comprises candidate beam information, wherein the candidate beam information comprises reference signal indication information corresponding to a candidate beam;
wherein the reporting (S302) the information of beam failure recovery to the base station corresponding to the first SCell by using the target reporting mode, comprises: reporting the information of beam failure recovery to the base station through a Physical Uplink Shared Channel, PUSCH, based on a configured grant.

2. The method according to claim 1, wherein the reporting (S302) the information of beam failure recovery to the base station corresponding to the first SCell by using the target reporting mode, further comprises:
reporting the information of beam failure recovery to the base station through a Physical Uplink Control Channel, PUCCH.

3. The method according to claim 2, wherein the step of reporting the information of beam failure recovery to the base station through the PUCCH, comprises:
reporting the information of beam failure recovery to the base station through the PUCCH on a periodic scheduling resource configured by the base station for the PUCCH carrying the information of beam failure recovery.

4. The method according to claim 1, wherein the step of reporting the information of beam failure recovery to the base station through the PUSCH based on the configured grant, comprises:
reporting the information of beam failure recovery to the base station through a Media Access Control-Control Element, MAC-CE.

5. A beam failure recovery method, comprising:
detecting (S401), by a base station corresponding to a first secondary cell, SCell, information of beam failure recovery reported by a User Equipment, UE, wherein the information of beam failure recovery comprises information indicating that a beam failure event occurs to the first secondary cell, and candidate beam information, or the information of beam failure recovery comprises candidate beam information, wherein the candidate beam information comprises reference signal indication information corresponding to a candidate beam; and
performing (S402), by the base station, beam failure recovery of the first SCell according to the detected information indicating that the beam failure event occurs to the first SCell and/or candidate beam information;
wherein the detecting (S401), by the base station corresponding to the first SCell, the information of beam failure recovery reported by the UE, comprises: detecting the information of beam failure recovery through a Physical Uplink Shared Channel, PUSCH, based on a configured grant.

6. The method according to claim 5, wherein the detecting (S401), by the base station corresponding to the first SCell, the information of beam failure recovery reported by the UE, further comprises:
detecting the information of beam failure recovery through a Physical Uplink Control Channel, PUCCH.

7. The method according to claim 5, wherein the detecting the information of beam failure recovery through the PUSCH based on the configured grant, comprises:
detecting the information of beam failure recovery in a Media Access Control-Control Element, MAC-CE.

8. A beam failure recovery apparatus, the apparatus being a User Equipment, UE, comprising:
a determining unit (701), configured to determine a target reporting mode for beam failure of a first secondary cell, SCell; and
the apparatus further comprises: a reporting unit (702), configured to report information of beam failure recovery to a base station corresponding to the first SCell by using the target reporting mode in a case that a UE detects that beam failure occurs to the first SCell, wherein the information of beam failure recovery comprises information indicating that a beam failure event occurs to the first SCell and candidate beam information, or the information of beam failure recovery comprises candidate beam information, wherein the candidate beam information comprises reference signal indication information corresponding to a candidate beam;
wherein the reporting unit (702) is further configured to report the information of beam failure recovery to the base station through a Physical Uplink Shared Channel, PUSCH, based on a configured grant.

9. The beam failure recovery apparatus according to claim 8, wherein the reporting unit (702) is further configured to:
report the information of beam failure recovery to the base station through a Physical Uplink Control Channel, PUCCH.

10. The beam failure recovery apparatus according to claim 9, wherein the reporting unit (702) configured to report the information of beam failure recovery to the base station through the PUSCH based on the configured grant is further configured to:
report the information of beam failure recovery to the base station through an MAC-CE.

11. A beam failure recovery apparatus, the apparatus being a base station, comprising:
a detecting unit (801), configured to detect information of beam failure recovery reported by a User Equipment, UE, wherein the information of beam failure recovery comprises information indicating that a beam failure event occurs to a first secondary cell, SCell, and candidate beam information, or the information of beam failure recovery comprises candidate beam information, wherein the candidate beam information comprises reference signal indication information corresponding to a candidate beam; and
a recovering unit (802), configured to perform beam failure recovery of the first SCell according to the detected information indicating that the beam failure event occurs to the first SCell and/or candidate beam information;
wherein the detecting unit (801) is further configured to detect the information of beam failure recovery through a Physical Uplink Shared Channel, PUSCH, based on a configured grant.

12. The beam failure recovery apparatus according to claim 11, wherein the detecting unit (801) is further configured to:
detect the information of beam failure recovery through a Physical Uplink Control Channel, PUCCH.

13. The beam failure recovery apparatus according to claim 12, wherein the detecting unit (801) configured to detect the information of beam failure recovery through the PUSCH based on the configured grant is further configured to:
detect the information of beam failure recovery in an MAC-CE.

## Patentansprüche

1. Verfahren zum Wiederherstellen eines Strahlausfalls, durchgeführt durch ein Benutzergerät (User Equipment, UE), wobei das Verfahren umfasst:
Ermitteln (S301) eines Zielmeldemodus für einen Strahlausfall einer ersten Sekundärzelle, SCell; und
in einem Fall, in dem das UE erkennt, dass der Strahlausfall an der ersten SCell auftritt, Melden (S302) von Informationen über eine Strahlausfallwiederherstellung an eine Basisstation, die der ersten SCell entspricht, indem der Zielmeldemodus verwendet wird, wobei die Informationen über die Strahlausfallwiederherstellung Informationen, die anzeigen, dass ein Strahlausfallereignis an der ersten SCell auftritt, und Kandidatenstrahlinformationen umfassen, oder wobei die Informationen über die Strahlausfallwiederherstellung Kandidatenstrahlinformationen umfassen, wobei die Kandidatenstrahlinformationen Anzeigeinformationen eines Referenzsignals umfassen, das einem Kandidatenstrahl entspricht;
wobei das Melden (S302) der Informationen über die Strahlausfallwiederherstellung an die Basisstation, die der ersten SCell entspricht, indem der Zielmeldemodus verwendet wird, umfasst: Melden der Informationen über die Strahlausfallwiederherstellung an die Basisstation durch einen physischen gemeinsam genutzten Uplink-Kanal (Physical Uplink Shared Channel, PUSCH) basierend auf einer konfigurierten Bewilligung.

2. Verfahren nach Anspruch 1, wobei das Melden (S302) der Informationen über die Strahlausfallwiederherstellung an eine Basisstation, die der ersten SCell entspricht, indem der Zielmeldemodus verwendet wird, ferner umfasst:
Melden der Informationen über die Strahlausfallwiederherstellung an die Basisstation durch einen physischen Uplink-Steuerkanal (Physical Uplink Control Channel, PUCCH).

3. Verfahren nach Anspruch 2, wobei der Schritt des Meldens der Informationen über die Strahlausfallwiederherstellung an die Basisstation durch den PUCCH umfasst:
Melden der Informationen über die Strahlausfallwiederherstellung an die Basisstation durch den PUCCH auf einer regelmäßigen Planungsressource, die von der Basisstation für den PUCCH konfiguriert ist, der die Informationen über die Strahlausfallwiederherstellung mitführt.

4. Verfahren nach Anspruch 1, wobei der Schritt des Meldens der Informationen über die Strahlausfallwiederherstellung an die Basisstation durch den PUSCH basierend auf der konfigurierten Bewilligung umfasst:
Melden der Informationen über die Strahlausfallwiederherstellung an die Basisstation durch ein Steuerelement einer Medienzugangssteuerung (Media Access Control-Control Element, MAC-CE).

5. Verfahren zum Wiederherstellen eines Strahlausfalls, umfassend:
Erkennen (S401), durch eine Basisstation, die einer ersten Sekundärzelle, SCell, entspricht, von Informationen über eine Strahlausfallwiederherstellung, die von einem Benutzergerät (User Equipment, UE) gemeldet wird, wobei die Informationen über die Strahlausfallwiederherstellung Informationen, die anzeigen, dass ein Strahlausfallereignis an der ersten Sekundärzelle auftritt, und Kandidatenstrahlinformationen umfassen, oder wobei die Informationen über die Strahlausfallwiederherstellung Kandidatenstrahlinformationen umfassen,
wobei die Kandidatenstrahlinformationen Anzeigeinformationen eines Referenzsignals umfassen, das einem Kandidatenstrahl entspricht; und
Durchführen (S402), durch die Basisstation, einer Strahlausfallwiederherstellung der ersten SCell gemäß den erkannten Informationen, die anzeigen, dass das Strahlausfallereignis an der ersten SCell auftritt und/oder gemäß den Kandidatenstrahlinformationen;
wobei das Erkennen (S401), durch die Basisstation, die der ersten SCell entspricht, der Informationen über eine Strahlausfallwiederherstellung, die von dem UE gemeldet wird, umfasst: Erkennen der Informationen über die Strahlausfallwiederherstellung durch einen physischen gemeinsam genutzten Uplink-Kanal, PUSCH, basierend auf einer konfigurierten Bewilligung.

6. Verfahren nach Anspruch 5, wobei das Erkennen (S401), durch die Basisstation, die der ersten SCell entspricht, der Informationen über eine Strahlausfallwiederherstellung, die von dem UE gemeldet wird, ferner umfasst:
Erkennen der Informationen über die Strahlausfallwiederherstellung durch einen physischen Uplink-Steuerkanal, PUCCH.

7. Verfahren nach Anspruch 5, wobei das Erkennen der Informationen über die Strahlausfallwiederherstellung durch den PUSCH basierend auf der konfigurierten Bewilligung umfasst:
Erkennen der Informationen über die Strahlausfallwiederherstellung in einem Steuerelement einer Medienzugangssteuerung, MAC-CE.

8. Vorrichtung zum Wiederherstellen eines Strahlausfalls, wobei die Vorrichtung ein Benutzergerät, UE, ist, umfassend:
eine Ermittlungseinheit (701), die konfiguriert ist zum Ermitteln eines Zielmeldemodus für einen Strahlausfall einer ersten Sekundärzelle, SCell; und
wobei die Vorrichtung außerdem umfasst: eine Meldeeinheit (702), die konfiguriert ist zum, in einem Fall, in dem das UE erkennt, dass der Strahlausfall an der ersten SCell auftritt, Melden von Informationen über eine Strahlausfallwiederherstellung an eine Basisstation, die der ersten SCell entspricht, indem der Zielmeldemodus verwendet wird, wobei die Informationen über die Strahlausfallwiederherstellung Informationen, die anzeigen, dass ein Strahlausfallereignis an der ersten SCell auftritt, und Kandidatenstrahlinformationen umfassen, oder wobei die Informationen über die Strahlausfallwiederherstellung Kandidatenstrahlinformationen umfassen, wobei die Kandidatenstrahlinformationen Anzeigeinformationen eines Referenzsignals umfassen, das einem Kandidatenstrahl entspricht;
wobei die Meldeeinheit (702) ferner konfiguriert ist zum Melden der Informationen über die Strahlausfallwiederherstellung an die Basisstation durch einen physischen gemeinsam genutzten Uplink-Kanal, PUSCH, basierend auf einer konfigurierten Bewilligung.

9. Vorrichtung zum Wiederherstellen eines Strahlausfalls nach Anspruch 8, wobei die Meldeeinheit (702) ferner konfiguriert ist zum:
Melden der Informationen über die Strahlausfallwiederherstellung an die Basisstation durch einen physischen Uplink-Steuerkanal, PUCCH.

10. Vorrichtung zum Wiederherstellen eines Strahlausfalls nach Anspruch 9, wobei die Meldeeinheit (702), die konfiguriert ist zum Melden der Informationen über die Strahlausfallwiederherstellung an die Basisstation durch den PUSCH basierend auf der konfigurierten Bewilligung, ferner konfiguriert ist zum:
Melden der Informationen über die Strahlausfallwiederherstellung an die Basisstation durch ein MAC-CE.

11. Vorrichtung zum Wiederherstellen eines Strahlausfalls, wobei die Vorrichtung eine Basisstation ist, umfassend:
eine Erkennungseinheit (801), die konfiguriert ist zum Erkennen von Informationen über eine Strahlausfallwiederherstellung, die von einem Benutzergerät, UE, gemeldet wird, wobei die Informationen über die Strahlausfallwiederherstellung Informationen, die anzeigen, dass ein Strahlausfallereignis an einer ersten Sekundärzelle, SCell, auftritt, und Kandidatenstrahlinformationen umfassen, oder wobei die Informationen über die Strahlausfallwiederherstellung Kandidatenstrahlinformationen umfassen, wobei die Kandidatenstrahlinformationen Anzeigeinformationen eines Referenzsignals umfassen, das einem Kandidatenstrahl entspricht; und
eine Wiederherstellungseinheit (802), die konfiguriert ist zum Durchführen einer Strahlausfallwiederherstellung der ersten SCell gemäß den erkannten Informationen, die anzeigen, dass das Strahlausfallereignis an der ersten SCell auftritt und/oder gemäß den Kandidatenstrahlinformationen;
wobei die Erkennungseinheit (801) ferner konfiguriert ist zum Erkennen der Informationen über die Strahlausfallwiederherstellung durch einen physischen gemeinsam genutzten Uplink-Kanal, PUSCH, basierend auf einer konfigurierten Bewilligung.

12. Vorrichtung zum Wiederherstellen eines Strahlausfalls nach Anspruch 11, wobei die Erkennungseinheit (801) ferner konfiguriert ist zum:
Erkennen der Informationen über die Strahlausfallwiederherstellung durch einen physischen Uplink-Steuerkanal, PUCCH.

13. Vorrichtung zum Wiederherstellen eines Strahlausfalls nach Anspruch 12, wobei die Erkennungseinheit (801), die konfiguriert ist zum Erkennen der Informationen über die Strahlausfallwiederherstellung durch den PUSCH basierend auf der konfigurierten Bewilligung, ferner konfiguriert ist zum:
Erkennen der Informationen über die Strahlausfallwiederherstellung in einem MAC-CE.

## Revendications

1. Procédé de récupération d'une défaillance de faisceau, réalisé par un équipement utilisateur, UE, le procédé comprenant :
la détermination (S301) d'un mode de signalement cible pour une défaillance de faisceau d'une première cellule secondaire, SCell ; et
dans un cas où l'UE détecte qu'une défaillance de faisceau affecte la première Scell, le signalement (S302) d'informations de récupération d'une défaillance de faisceau à une station de base correspondant à la première SCell au moyen du mode de signalement cible, les informations de récupération d'une défaillance de faisceau comprenant des informations indiquant qu'un événement de défaillance de faisceau affecte la première Scell et des informations de faisceau candidat, ou bien les informations de récupération d'une défaillance de faisceau comprenant des informations de faisceau candidat, les informations de faisceau candidat comprenant des informations d'indication de signal de référence correspondant à un faisceau candidat ;
dans lequel le signalement (S302) des informations de récupération d'une défaillance de faisceau à la station de base correspondant à la première SCell au moyen du mode de signalement cible comprend : le signalement des informations de récupération d'une défaillance de faisceau à la station de base par le biais d'un canal partagé de liaison montante physique, PUSCH, sur la base d'une autorisation configurée.

2. Procédé selon la revendication 1, dans lequel le signalement (S302) des informations de récupération d'une défaillance de faisceau à la station de base correspondant à la première SCell au moyen du mode de signalement cible comprend en outre :
le signalement des informations de récupération d'une défaillance de faisceau à la station de base par le biais d'un canal de contrôle de liaison montante physique, PUCCH.

3. Procédé selon la revendication 2, dans lequel l'étape de signalement des informations de récupération d'une défaillance de faisceau à la station de base par le biais du PUCCH comprend :
le signalement des informations de récupération d'une défaillance de faisceau à la station de base par le biais du PUCCH sur une ressource de planification périodique configurée par la station de base pour le PUCCH transportant les informations de récupération d'une défaillance de faisceau.

4. Procédé selon la revendication 1, dans lequel l'étape de signalement des informations de récupération d'une défaillance de faisceau à la station de base par le biais du PUSCH sur la base de l'autorisation configurée comprend :
le signalement des informations de récupération d'une défaillance de faisceau à la station de base par le biais d'un élément de commande de contrôle d'accès au support, MAC-CE.

5. Procédé de récupération d'une défaillance de faisceau, comprenant :
la détection (S401), par une station de base correspondant à une première cellule secondaire, SCell, d'informations de récupération d'une défaillance de faisceau signalées par un équipement utilisateur, UE, les informations de récupération d'une défaillance de faisceau comprenant des informations indiquant qu'un événement de défaillance de faisceau affecte la première cellule secondaire et des informations de faisceau candidat, ou bien les informations de récupération d'une défaillance de faisceau comprenant des informations de faisceau candidat, les informations de faisceau candidat comprenant des informations d'indication de signal de référence correspondant à un faisceau candidat ; et
la réalisation (S402), par la station de base, de la récupération d'une défaillance de faisceau de la première SCell en fonction des informations détectées indiquant que l'évènement de défaillance de faisceau affecte la première SCell et/ou des informations de faisceau candidat ;
dans lequel la détection (S401), par la station de base correspondant à la première SCell, des informations de récupération d'une défaillance de faisceau signalées par l'UE comprend : la détection des informations de récupération d'une défaillance de faisceau par le biais d'un canal partagé de liaison montante physique, PUSCH, sur la base d'une autorisation configurée.

6. Procédé selon la revendication 5, dans lequel la détection (S401), par la station de base correspondant à la première SCell, des informations de récupération d'une défaillance de faisceau signalées par l'UE comprend en outre :
la détection des informations de récupération d'une défaillance de faisceau par le biais d'un canal de contrôle de liaison montante physique, PUCCH.

7. Procédé selon la revendication 5, dans lequel la détection des informations de récupération d'une défaillance de faisceau par le biais du PUSCH sur la base de l'autorisation configurée comprend :
la détection des informations de récupération d'une défaillance de faisceau dans un élément de commande de contrôle d'accès au support, MAC-CE.

8. Appareil de récupération d'une défaillance de faisceau, l'appareil étant un équipement utilisateur, UE, comprenant :
une unité de détermination (701), configurée pour déterminer un mode de signalement cible pour une défaillance de faisceau d'une première cellule secondaire, SCell ; et
l'appareil comprend en outre : une unité de signalement (702), configurée pour signaler des informations de récupération d'une défaillance de faisceau à une station de base correspondant à la première SCell en utilisant le mode de signalement cible dans un cas où une UE détecte qu'une défaillance de faisceau affecte la première SCell, les informations de récupération d'une défaillance de faisceau comprenant des informations indiquant qu'un événement de défaillance de faisceau affecte la première Scell et des informations de faisceau candidat, ou bien les informations de récupération d'une défaillance de faisceau comprenant des informations de faisceau candidat, les informations de faisceau candidat comprenant des informations d'indication de signal de référence correspondant à un faisceau candidat ;
dans lequel l'unité de signalement (702) est également configurée pour signaler les informations de récupération d'une défaillance de faisceau à la station de base par le biais d'un canal partagé de liaison montante physique, PUSCH, sur la base d'une autorisation configurée.

9. Appareil de récupération d'une défaillance de faisceau selon la revendication 8, dans lequel l'unité de signalement (702) est également configurée pour :
signaler les informations de récupération d'une défaillance de faisceau à la station de base par le biais d'un canal de contrôle de liaison montante physique, PUCCH.

10. Appareil de récupération d'une défaillance de faisceau selon la revendication 9, dans lequel l'unité de signalement (702) configurée pour signaler les informations de récupération d'une défaillance de faisceau à la station de base par le biais du PUSCH sur la base de l'autorisation configurée est également configurée pour :
signaler les informations de récupération d'une défaillance de faisceau à la station de base par le biais d'un MAC-CE.

11. Appareil de récupération d'une défaillance de faisceau, l'appareil étant une station de base, comprenant :
une unité de détection (801), configurée pour détecter des informations de récupération d'une défaillance de faisceau signalées par un équipement utilisateur, UE, les informations de récupération d'une défaillance de faisceau comprenant des informations indiquant qu'un événement de défaillance de faisceau affecte une première cellule secondaire, SCell, et des informations de faisceau candidat, ou bien les informations de récupération d'une défaillance de faisceau comprenant des informations de faisceau candidat, les informations de faisceau candidat comprenant des informations d'indication de signal de référence correspondant à un faisceau candidat ; et
une unité de récupération (802), configurée pour réaliser la récupération d'une défaillance de faisceau de la première SCell en fonction des informations détectées indiquant que l'évènement de défaillance de faisceau affecte la première SCell et/ou des informations de faisceau candidat ;
dans lequel l'unité de détection (801) est également configurée pour détecter les informations de récupération d'une défaillance de faisceau par le biais d'un canal partagé de liaison montante physique, PUSCH, sur la base d'une autorisation configurée.

12. Appareil de récupération d'une défaillance de faisceau selon la revendication 11, dans lequel l'unité de détection (801) est également configurée pour :
détecter les informations de récupération d'une défaillance de faisceau par le biais d'un canal de contrôle de liaison montante physique, PUCCH.

13. Appareil de récupération d'une défaillance de faisceau selon la revendication 12, dans lequel l'unité de détection (801) configurée pour détecter les informations de récupération d'une défaillance de faisceau par le biais du PUSCH sur la base de l'autorisation configurée est également configurée pour :
détecter les informations de récupération d'une défaillance de faisceau dans un MAC-CE.
